# EUROPEAN PATENT SPECIFICATION

(11) **EP 2 247 191 B1**
(45) Date of publication and mention of the grant of the patent: **11.07.2012**
(21) Application number: 09712796.3
(22) Date of filing: 20.02.2009
(51) Int. Cl.: A23J 3/18, A23L 1/212, A23L 1/314, A23L 1/315, A23L 1/317, A23L 1/325, A23J 3/16, A23J 3/22, A23J 3/26, A23L 1/31

(54) **A PROTEIN COMPOSITION FOR MEAT PRODUCTS OR MEAT ANALOG PRODUCTS**
PROTEINZUSAMMENSETZUNG FÜR FLEISCHPRODUKTE ODER FLEISCHERSATZPRODUKTE
COMPOSITION DE PROTÉINES POUR PRODUITS DE VIANDE OU PRODUITS ANALOGUES À LA VIANDE

(30) Priority: 20.02.2008 US 30098 P; 19.02.2009 US 389148
(43) Date of publication of application: 10.11.2010
(73) Proprietor: Solae, LLC, St. Louis MO 63110 (US)
(72) Inventor: KYED, Morten-Hoffman, DK-8330 Beder (DK); RUSCONI, Paolo, I-20052 Monza (IT)
(74) Representative: Hirsch, Marc-Roger
(86) International application number: PCT/US2009/034693
(87) International publication number: WO 2009/105654

(56) References cited:
- WO-A-99/13735
- WO-A-2006/023518
- GB-A- 1 090 441
- JP-A- 4 293 455
- US-A- 3 900 576
- US-A- 4 219 576
- US-A- 4 338 340
- US-A1- 2006 188 643

## Description

### Field of the Invention

This invention relates to a protein composition and to the use of the protein composition in meat products, vegetable products, and fruit products. This invention also relates to a process for preparing the protein composition. Further, this invention relates to a meat product containing the protein composition and the process for making the same by the combination of the protein composition, a raw meat, and water, such that a meat product is obtained having a texture similar to that of intact muscles.

### Background of the Invention

An important aspect of the present invention is the development of an unstructured protein product into a structured protein product. Particularly, in one embodiment, the present invention provides a product and method for taking an unstructurized protein product with no visible grain or texture and converting it into a structurized, protein product with a definite shape having the consistency of cooked muscle meat.

The term "structure" describes a wide variety of physical properties of a food product. A product of acceptable structure is usually synonymous with the quality of a product. Structure has been defined as "the attribute of a substance resulting from a combination of physical properties and perceived by senses of touch, including kinethesia and mouth feel, sight, and hearing. Structure, as defined by the International Organization of Standardization, is "all of the rheological and structural (geometric and surface) attributes of a food product perceptible by means of mechanical, tactual and, where appropriate, visual and auditory receptors." The following terms have been used to describe product characteristics falling under the umbrella "structure":

**TABLE I**

| **ABRIDGED LIST OF FOOD STRUCTURE ADJECTIVES** | | | |
|---|---|---|---|
| Adhesive | Fleshy | Mushy | Soft |
| Bouncy | Fluffy | Oily | Soggy |
| Brittle | Foamy | Pasty | Sparkly |
| Bubbly | Fragile | Plastic | Splintery |
| Chewy | Full-bodied | Porous | Spongy |
| Clingy | Gooey | Powdery | Springy |
| Coating | Grainy | Puffy | Sticky |
| Cohesive | Gritty | Pulpy | Stringy |
| Creamy | Gummy | Rich | Syrupy |
| Crisp | Hard | Rough | Tender |
| Crumbly | Heavy | Rubbery | Thick |
| Crusty | Heterogeneous | Runny | Thin |
| Dense | Juicy | Sandy | Tingly |
| Doughy | Lean | Scratchy | Tough |
| Dry | Light | Short | Uniform |
| Elastic | Limp | Silky | Viscous |
| Fatty | Lumpy | Slippery | Watery |
| Firm | Moist | Slivery | Waxy |
| Flaky | Mouth coating | Smooth | Wiggly |

Accelerated attention has been given to structure as it pertains to newer food substances including fabricated and imitation products, formed meat and fish products, where very serious efforts are made by processes to duplicate the properties of the original or other natural food substances. The use of non-traditional raw materials, synthetic flavors, fillers, and stretchers all tend to alter certain textural characteristics of the finished product. Frequently, the imitation of textural properties is of much greater difficulty in the replication of taste, odors, and colors. Numerous manipulative processes, including extrusion structurization, have been developed to simulate natural structural properties. The processes generally find it prudent to duplicate the properties of the original substances to the extent feasible technically and economically in order to promote early market acceptance. While structure has attributes related to appearance, it also has attributes related to touch and also mouth feel or interaction of food when it comes in contact with the mouth. Frequently, these sensory perceptions involved with chewing can relate to impressions of either desirability or undesirability.

Thus, structural terms include terms relating to the behavior of the material under stress or strain and include, for example, the following: firm, hard, soft, tough, tender, chewy, rubbery, elastic, plastic, sticky, adhesive, tacky, crispy, crunchy, etc. Secondly, structure terms may be related to the structure of the material: smooth, fine, powdery, chalky, lumpy, mealy, coarse, gritty, etc: Third, structure terms may relate to the shape and arrangement of structural elements, such as: flaky, fibrous, stringy, pulpy, cellular, crystalline, glassy, spongy, etc. Last, structure terms may relate to mouth feel characteristics, including: mouth feel, body, dry, moist, wet, watery, waxy, slimy, mushy, etc.

As used herein, "unstructurized" and "structurized" describe the characteristics of the food product as set forth in Table II:

**TABLE II**

| | Unstructurized Characteristic | Structurized Characteristic |
|---|---|---|
| Behavior of | sticky | firm |
| Material under | gooey | chewy |
| Stress or Strain | plastic | |
| Structure of | smooth | coarse |
| Material | | |
| Shape and | gelatinous | fibrous |
| Arrangement of | pulpy | crusty |
| Structural Elements | pasty | |
| Mouth Feel | creamy | moist |
| mushy | dry | |
| with body | | |

The Document US 3,900,576 relates to meat emulsion, such as frankfurter, that can be extended by the addition of an aqueous mixture of vegetable protein fiber, vegetable protein isolate, albumen, vegetable protein concentrate, edible whey, emulsifier, non-fat dried milk solids, gluten or an aqueous flour slurry, and salt.

The JP4293455 application relates to a process for obtaining a soybean proteinic food having a rich fiber texture. This texture is similar to that of ham. Granular soybean proteins are used and provide a hydrated substance which is then mixed with other protein (for example whey protein) in order to form said soybean proteinic food.

The US 4,219,576 application relates to method of manufacturing a simulated corned beef product which utilizes fibrillated protein fibers obtained by heating a slurry of proteinaceous material under a high pressure to produce elongated tender protein filaments or fibers and extruding the slurry through an orifice to remove the tender protein filaments or fibers from the protein slurry. The fibrillated protein fibers are then mixed with an emulsion containing a seasoning agent, a flavoring agent, a spice and a coloring agent in order to obtain the simulated corned beef.

### Summary of the Invention

One aspect of the invention is directed to a granular composition. The granular composition, comprises;
(A) a hydrated plant protein material and
(B) a hydrated structured protein material haying protein fibers that are substantially aligned;
wherein the weight ratio of (A) to (B) is between about 1.5 and about 5 to about 1, said granular composition having a particle size of between about 2 millimeters and about 10 millimeters.

In another aspect, the invention discloses a process for preparing a granular composition, comprising;
combining
(A) a hydrated plant protein material having a quotient of the weight of water divided by the weight of a plant protein material of from about 2.7 to about 4.0 with
(B) a hydrated structured protein material having protein fibers that are substantially aligned, having a quotient of the weight of water divided by the weight of a structured protein material of from about 1.5 to about 2.5 to form a soft fibrous gel;
wherein the weight ratio of (A) to (B) is between about 1.5 and about 5 to about 1; cooling the soft fibrous gel to obtain a hard fibrous gel; and
reducing the size of the hard fibrous gel to particles of between about 2 millimeters and about 10 millimeters.

In a further aspect, the invention discloses a meat product, comprising; a hydrated granular composition comprising;
(A) a hydrated plant protein material;
(B) a hydrated structured protein material having protein fibers that are substantially aligned;
   wherein the weight ratio of (A) to (B) is between about 1.5 and about 5 to about 1, said granular composition having a particle size of between about 2 millimeters and about 10 millimeters; and
(C) a raw meat;
wherein the weight ratio of the raw meat to the granular composition is between about 20 to about 2.

In another aspect, the invention discloses a process for preparing a meat product, comprising the steps of;
combining a granular composition prepared by the process comprising;
combining
(A) a hydrated plant protein material having a quotient of water on a weight basis divided by the plant protein material on a weight basis of from about 2.7 to about 4.0 with
(B) a hydrated structured protein material having protein fibers that are substantially aligned, having a quotient of the weight of water divided by the weight of a structured protein material of from about 1.5 to about 2.5 to form a soft fibrous gel;
   wherein the weight ratio of (A) to (B) is between about 1.5 and about 5 to about 1; cooling the soft fibrous gel to obtain a hard fibrous gel; and
   reducing the size of the hard fibrous gel to particles of between about 2 millimeters and about 10 millimeters; and
   mixing the particles with
(C) a raw meat;
   wherein the weight ratio of the raw meat to the granular composition is between about 20 to about 2; and
   wherein the meat product contains granular composition particles of between about 2 millimeters and about 10 millimeters.

In a further aspect, the invention discloses a vegetable product or a fruit product, comprising; a granular composition comprising;
(A) a hydrated plant protein material;
(B) a hydrated structured protein material having protein fibers that are substantially aligned;
   wherein the weight ratio of (A) to (B) is between about 1.5 and about 5 to about 1, said granular composition having a particle size of between about 2 millimeters and about 10 millimeter and
(D) a comminuted vegetable or comminuted fruit.

In another aspect, the invention discloses a process for preparing a vegetable product or fruit product, comprising the steps of;
combining a granular composition prepared by the process comprising;
combining
(A) a hydrated plant protein material having a quotient of water on a weight basis divided by the plant protein material on a weight basis of from about 2.7 to about 4.0 with
(B) a hydrated structured protein material having protein fibers that are substantially aligned, having a quotient of the weight of water divided by the weight of a structured protein material of from about 1.5 to about 2.5 to form a soft fibrous gel;
   wherein the weight ratio of (A) to (B) is between about 1.5 and about 5 to about 1; cooling the soft fibrous gel to obtain a hard fibrous gel; and
   reducing the size of the hard fibrous gel to particles of between about 2 millimeters and about 10 millimeters; and
   mixing the particles with
(D) a comminuted vegetable or comminuted fruit; and
mixing the granular composition, and comminuted vegetable or comminuted fruit to produce a vegetable product or fruit product.

### Brief Description of the Drawing

The application file contains at least one photograph executed in color. Copies of this patent application publication with color photographs will be provided by the Office upon request and payment of the necessary fee.

FIG. 1 is perspective view of one embodiment of the peripheral die assembly;

FIG. 2 is an exploded view of the peripheral die assembly showing the die insert, die sleeve and die cone;

FIG. 3 is a perspective view of the die insert;

FIG. 4 is a top view of the die insert;

FIG. 4A is a cross-sectional view taken along line 4A-4A of FIG. 4 showing the plurality of flow diverters of the die insert;

FIG. 4B is an enlarged view of FIG. 4A showing a flow pathway defined between each adjacent pair of flow diverters;

FIG. 4C is an enlarged top view of FIG. 4 showing the flow pathway defined between each adjacent pair of flow diverters;

FIG. 5 is a rear view of the die insert;

FIG. 6 is a perspective view of the die insert disposed inside the rear portion of the die sleeve;

FIG. 7 is perspective view of the front portion of the die sleeve engaged to the die cone;

FIG. 8 is a cross sectional view taken along line 8-8 of FIG. 7 showing the front portion of the die sleeve engaged to the die cone;

FIG. 9 is a cross-sectional view taken along line 9-9 of FIG. 1 showing a flow channel defined between the die sleeve, die insert, and die cone arrangement;

FIG. 9A is an enlarged cross-sectional view of FIG. 9 showing the interface between the flow channel and the outlet of the die sleeve;

FIG. 10 is a cross-sectional view of an embodiment of the peripheral die assembly without the die cone;

FIG. 11 is a partial cross-sectional view of the die insert disposed inside the die sleeve showing the configuration of the flow channel;

FIG. 12 is a rear perspective view showing the configuration of the flow channel;

FIG. 13 is a front perspective view showing the configuration of the flow channel;

FIG. 14 is a perspective view of one embodiment of the die insert with scalloped openings; and

FIG. 15 is a perspective view of another embodiment of the die insert with scalloped openings;

FIG. 16 is a perspective view of another embodiment of the peripheral die assembly;

FIG. 17 is an exploded view of the peripheral die assembly shown in FIG. 16;

FIG. 18 is a perspective view of the die insert disposed inside the die sleeve shown in FIG. 16;

FIG. 19 is a top view of the die insert disposed inside the die sleeve shown in FIG. 16;

FIG. 20 is a cross sectional view of the peripheral die assembly taken along line 20-20 of FIG. 19.

FIG. 21 is an enlarged view of the die insert engaged to the die sleeve showing the flow pathways defined between each adjacent pair of flow diverters; and

FIG. 22 is a front perspective view showing the general configuration of the extrusion as it flows through the flow channel defined by the embodiment of the peripheral die assembly shown in FIGS. 16-21.

FIG 23 depicts a color photographic image of a firm fibrous gel prior to particle size reduction.

FIG 24 depicts a color photographic image of a firm fibrous gel after particle size reduction.

FIG. 25 is a cross sectional view of a cylindrical stuffed meat product.

Corresponding reference characters indicate corresponding elements among the view of the drawings. The headings used in the figures should not be interpreted to limit the scope of the claims.

### Detailed Description of the Invention

### Definitions

The term "animal meat" as used herein refers to the flesh, whole meat muscle, or parts thereof derived from an animal.

The term "comminuted fruit" as used herein refers to a puree of a single fruit or a mixture of a puree of more than one fruit.

The term "comminuted vegetable" as used herein refers to a puree of a single vegetable or a mixture of a puree of more than one vegetable.

The term "extrudate" as used herein refers to the product of extrusion. In this context, the plant protein products comprising protein fibers that are substantially aligned may be extrudates in some embodiments.

The term "fiber" as used herein refers to a plant protein product having a size of approximately 4 centimeters in length and 0.2 centimeters in width after the shred characterization test detailed in Example 7 is performed. In this context, the term "fiber" does not include the nutrient class of fibers, such as soybean cotyledon fibers, and also does not refer to the structural formation of substantially aligned protein fibers comprising the plant protein products.

The term "gluten" as used herein refers to a protein fraction in cereal grain flour, such as wheat, that possesses a high content of protein as well as unique structural and adhesive properties.

The term "gluten free starch" as used herein refers to various starch products such as modified tapioca starch. Gluten free or substantially gluten free starches are made from wheat, com, and tapioca based starches. They are gluten free because they do not contain the gluten from wheat, oats, rye or barley.

The term "hydration test" as used herein measures the amount of time in minutes necessary to hydrate a known amount of the protein composition.

The term "large piece" as used herein is the manner in which a colored or uncolored structured protein product's shred percentage is characterized. The determination of shred characterization is detailed in Example 7.

The term "moisture content" as used herein refers to the amount of moisture in a material. The moisture content of a material can be determined by A.O.C.S. (American Oil Chemists Society) Method Ba 2a-38 (1997), which is incorporated herein by reference in its entirety.

The term "protein content," as for example, soy protein content as used herein, refers to the relative protein content of a material as ascertained by A.O.C.S. (American Oil Chemists Society) Official Methods Bc 4-91(1997), Aa 5-91(1997), or Ba 4d-90(1997), each incorporated herein by reference in their entirety, which determine the total nitrogen content of a material sample as ammonia, and the protein content as 6.25 times the total nitrogen content of the sample.

The term "protein fiber" as used herein refers to the individual continuous filaments or discrete elongated pieces of varying lengths that together define the structure of the plant protein products. Additionally, because both the colored and uncolored structured protein products have protein fibers that are substantially aligned, the arrangement of the protein fibers impart the texture of whole meat muscle to the colored and uncolored structured protein products.

The term "shear strength" as used herein measures the ability of a textured protein to form a fibrous network with a strength high enough to impart meat-like texture and appearance to a formed product. Shear strength is measured in grams.

The term "simulated" as used herein refers to an animal meat composition that contains no animal meat.

The term "soy cotyledon fiber" as used herein refers to the polysaccharide portion of soy cotyledons containing at least about 70% dietary fiber. Soy cotyledon fiber typically contains some minor amounts of soy protein, but may also be 100% fiber. Soy cotyledon fiber, as used herein, does not refer to, or include, soy hull fiber. Generally, soy cotyledon fiber is formed from soybeans by removing the hull and germ of the soybean, flaking or grinding the cotyledon and removing oil from the flaked or ground cotyledon, and separating the soy cotyledon fiber from the soy material and carbohydrates of the cotyledon.

The term "soy protein concentrate" as used herein is a soy material having a protein content of from about 65% to less than about 90% soy protein on a moisture-free basis. Soy protein concentrate also contains soy cotyledon fiber, typically from about 3.5% up to about 20% soy cotyledon fiber by weight on a moisture-free basis. A soy protein concentrate is formed from soybeans by removing the hull and germ of the soybean, flaking or grinding the cotyledon and removing oil from the flaked or ground cotyledon, and separating the soy protein and soy cotyledon fiber from the soluble carbohydrates of the cotyledon.

The term "soy flour" as used herein, refers to a comminuted form of defatted soybean material, preferably containing less than about 1% oil, formed of particles having a size such that the particles can pass through a No. 100 mesh (U.S. Standard) screen. The soy cake, chips, flakes, meal, or mixture of the materials are comminuted into soy flour using conventional soy grinding processes. Soy flour has a soy protein content of about 49% to about 65% on a moisture free basis. Preferably the flour is very finely ground, most preferably so that less than about 1% of the flour is retained on a 300 mesh (U.S. Standard) screen.

The term "soy protein isolate" as used herein is a soy material having a protein content of at least about 90% soy protein on a moisture free basis. A soy protein isolate is formed from soybeans by removing the hull and germ of the soybean from the cotyledon, flaking or grinding the cotyledon and removing oil from the flaked or ground cotyledon, separating the soy protein and carbohydrates of the cotyledon from the cotyledon fiber, and subsequently separating the soy protein from the carbohydrates.

The term "strand" as used herein refers to a plant protein product having a size of approximately 2.5 to about 4 centimeters in length and greater than approximately 0.2 centimeter in width after the shred characterization test detailed in Example 7 is performed.

The term "starch" as used herein refers to starches derived from any native source. Typically sources for starch are cereals, tubers, roots, legumes, and fruits.

The term "weight on a moisture free basis" as used herein refers to the weight of a material after it has been dried to completely remove all moisture, e.g. the moisture content of the material is 0%. Specifically, the weight on a moisture free basis of a material can be obtained by weighing the material after the material has been placed in a 45°C oven until the material reaches a constant weight.

The term "wheat flour" as used herein refers to flour obtained from the milling of wheat. Generally speaking, the particle size of wheat flour is from about 14 to about 120µm.

The term "stuffed meat" as used herein refers to placing (stuffing) a meat in an emulsion or semisolid form, into a natural or artificial casing, thereby producing a meat product. A non-exhaustive list of examples of stuffed meat products are sausage, salami, hot dogs, and bologna.

### The Granular Composition

One aspect of the invention is directed to a granular composition. The granular composition, comprises;
(A) a hydrated plant protein material and
(B) a hydrated structured protein material having protein fibers that are substantially aligned;
wherein the weight ratio of (A) to (B) is between about 1.5 and about 5 to about 1. to produce a granular composition having a particle size of between about 2 millimeters and about 10 millimeters.

### (A) The Hydrated Plant Protein Material

Within the plant protein material for component (A), the plant protein is selected from the group consisting of legumes, corn, peas, canola, sunflowers, sorghum, rice, amaranth, potato, tapioca, arrowroot, canna, lupin, rape, wheat, oats, rye, barley, and mixtures thereof. In an exemplary embodiment, the plant protein for the plant protein material is isolated from soybeans or corn. A suitable soybean derived protein-containing ingredient is soybean protein isolate, which is detailed below. Suitable corn derived protein-containing ingredients include corn gluten meal, for example, zein.

In preparing the plant protein material that is to be hydrated to form component (A), a suitable soy protein isolate is mixed with water at either a low temperature or at a high temperature. The quotient of the weight of water divided by the weight of a soy protein granule is from about 2.7 to about 4.0.

The soy protein isolate is preferably selected that is not a highly hydrolyzed soy protein isolate. In certain embodiments, highly hydrolyzed soy protein isolates, however, may be used in combination with other soy protein isolates provided that the highly hydrolyzed soy protein isolate content of the combined soy protein isolates is generally less than about 40% of the combined soy protein isolates, by weight. Examples of soy protein isolates that are useful in the present invention are commercially available, for example, from Solae, LLC (St. Louis, MO), and include SUPRO^{®} 500E, SUPRO^{®} EX 33, SUPRO^{®} EX 37, SUPRO^{®} EX 45, SUPRO^{®} 620, SUPRO^{®} 630, and SUPRO^{®} 545.

In preparing the soy protein material that is to be hydrated to form component (A) by the low temperature method, the soy protein isolate is hydrated and blended to form a gel. Hydration can be carried out in any type of mixer, such as for example a Kramer Grebe VSM65, manufactured by Kramer-Grebe, Biedenkopf-Wallau, Germany. Hydration of the soy protein isolate is an important step in the process of the soy protein material. In this regard, the soy protein isolate is hydrated with water, which has been cooled to a temperature of about 0°C to about 20°C, preferably about 0°C to about 10°C, and most preferably about 0°C to about 5°C. Preferably, hydration is carried out at this temperature range at a weight ratio of about 1.5-6 parts of water to 1 part of isolate. Preferably, the weight ratio of water to isolate is about 3-4 parts of water to 1 part of isolate.

Blending is carried out for a period of time at the temperature range to substantially hydrate the protein. The hydrated protein is then held at the indicated temperature range for a period of time sufficient to form a gel. Preferably, the hydrated and blended isolate is held at between about -30°C to 10°C for about 30 seconds to about 2 minutes.

The following examples set forth specific but non-limiting embodiments for the preparation of the soy protein material by the low temperature method.

### Example 1

A soy protein isolate, 5000 grams of SUPRO 500E" is hydrated with 15,000 grams of ice water which comprises 20% by weight shaved ice and 80% cold water in a bowl cutter. The water and ice mixture have a temperature of 2°C. This provides a weight ratio of 3 parts of water to 1 part of isolate. This mixture is allowed to mix for one minute in order to hydrate the protein and form a gel. The temperature during hydration is about 8°C.

### Example 2

The procedure of Example 1 is repeated using 5714 grams of SUPRO^{®} 500E and 14,285 grams of the water and ice mixture to provide a weight ratio of 2.5 parts of water to 1 part of isolate.

In preparing the soy protein material that is to be hydrated to component (A) by the high temperature method, the soy protein isolate is hydrated and blended to form a gel under conditions of high shear. Although the soy protein material formed by the high temperature method should not be considered as being dependent on specific equipment, nevertheless hydration and blending can be carried out virtually simultaneously with a standard commercial bowl cutter

The soy protein isolate is hydrated with water which has a temperature of at least about 50°C, preferably about 50°C to about 100°C, with a most preferred temperature range of about 60 °C to about 80°C. This can be quickly and conveniently carried out in the bowl cutter by the addition of a soy protein isolate to the heated water contained in the bowl. The use of heated water is important for obtaining the desired degree of structural integrity and firmness in the gel. Preferably the heated water is added to the soy protein isolate in an amount sufficient to provide a ratio of about 2-3.5 parts by weight of water to about 1 part by weight of soy protein isolate. The most preferred ratio of water to isolate is about 3 parts by weight of water to about 1 part by weight of the soy protein isolate.

Blending of the isolate and water is carried out in the bowl cutter or other suitable apparatus for a period of time sufficient in order to form a gel. The desired gel firmness can be readily determined by visual observation. Typically, blending is carried out under conditions of shear or mechanical agitation so that the isolate is formed into a gel. The period of time sufficient to form hydrate the soy protein isolate and form a gel is about 30 seconds to about 2 minutes.

The following examples set forth specific but non-limiting embodiments for the preparation of the soy protein materials by the high temperature method.

### Example 3

Added to a bowl cutter is 16250 grams of water at 70°C, followed by 5000 grams of Supro 500E. The water to isolate ratio is 3.25:1. The soy protein isolate and water are blended or chopped at slow speed for 20-30 seconds until mixing is achieved, followed by blending or chopping at high speed under conditions of shear for about 20 to 30 seconds, until a gel is formed.

### Example 4

The above procedure is repeated to prepare a sample of the soy protein material prepared by the high temperature method by using a hydration ratio of 2.5 parts of water to 1 part of isolate.

In the preparation of the soy protein material by the low temperature method or the high temperature method, it is also desirable in the context of the present invention to include additional additives with the vegetable protein isolate such as flavoring, colors, and the like provided that the additive does not adversely affect the granular structure. Examples of suitable flavorings and the like include hydrolyzed vegetable proteins and natural flavorings. Salt can sometimes be added to the vegetable protein isolate although this is not generally preferred for purposes of the present invention since the salt will sometimes interfere with the gel formation depending on the amount added for flavoring purposes. It is preferable therefore, to add any salt needed for flavoring and the like during the time that components (A) and (B) are mixed with raw meat and water. Likewise, vitamins and minerals can be added to improve the overall nutritional profile.

The soy protein material for hydration, which is produced by the low temperature method or the high temperature method, can be frozen in order to provide extended storage or can include various materials such as antimicrobial or antimycotic agents to provide some degree of shelf stability for the hydrated granule, provided that these additives do not interfere with the formation of the gel or are added to the surface of the gel following formation.

The hydrated plant protein material does not have protein fibers that are substantially aligned. Thus the hydrated plant protein material and the hydrated structured protein material are two separate components.

### (B) The Hydrated Structured Protein Material

In preparing the structured protein material having protein fibers that are substantially aligned, that is to be hydrated to form component (B), a suitable structured protein material is mixed with water. The quotient of the weight of water divided by the weight of a structured protein material is from about 1.5 to about 2.5.

The structured protein materials comprise protein fibers that are substantially aligned, is described in more detail below. In an exemplary embodiment, the structured protein materials are extrudates of protein material that have been subjected to the extrusion process detailed below.

### protein-containing materials

A variety of ingredients that contain protein may be utilized in a thermal plastic extrusion process to produce structured protein materials suitable for use herein. While ingredients of protein containing products derived from plants are typically used, it is also envisioned that protein containing products derived from other sources, such as animal sources, may be utilized without departing from the scope of the invention. For example, a dairy protein selected from the group consisting of casein, caseinates, whey protein, and mixtures thereof may be utilized. In an exemplary embodiment, the dairy protein is whey protein. By way of further example, an egg protein selected from the group consisting of ovalbumin, ovoglobulin, ovomucin, ovomucoid, ovotransferrin, ovovitella, ovovitellin, albumin globulin, and vitellin may be utilized. Further, meat proteins or protein ingredients consisting of collagen, blood, organ meat, mechanically separated meat, partially defatted tissue and blood serum proteins may be included as one or more of the ingredients of the structured protein products.

It is envisioned that other ingredient types in addition to the above protein containing materials may be utilized. Non-limiting examples of such ingredients include sugars, starches, oligosaccharides, soy fiber and other dietary fibers.

It is also envisioned that the protein-containing products may be gluten-free. Because gluten is typically used in filament formation during the extrusion process, if a gluten-free starting material is used, an edible cross-linking agent may be utilized to facilitate filament formation. Non-limiting examples of suitable cross-linking agents include Konjac glucomannan (KGM) flour, beta 1,3 glucan (Pureglucan™ or Curdlan manufactured by Takeda-Kirin Foods), transglutaminase, calcium salts, and magnesium salts. One skilled in the art can readily determine the amount of cross-linking material needed, if any, in gluten-free embodiments.

Irrespective of its source or ingredient classification, the ingredients utilized in the extrusion process are typically capable of forming extrudates having protein fibers that are substantially aligned. Suitable examples of such ingredients are detailed more fully below.

### plant protein materials

In an exemplary embodiment, at least one ingredient derived from a plant will be utilized to form the structured protein-containing material. Generally speaking, the ingredient will comprise a plant protein. The amount of plant protein present in the ingredient(s) utilized can and will vary depending upon the application. For example, the amount of plant protein present in the ingredient(s) utilized may range from about 40% to about 100% by weight. In another embodiment, the amount of plant protein present in the ingredient(s) utilized may range from about 50% to about 100% by weight. In an additional embodiment, the amount of plant protein present in the ingredient(s) utilized may range from about 60% to about 100% by weight. In a further embodiment, the amount of plant protein present in the ingredient(s) utilized may range from about 70% to about 100% by weight. In still another embodiment, the amount of plant protein present in the ingredient(s) utilized may range from about 80% to about 100% by weight. In a further embodiment, the amount of protein present in the ingredient(s) utilized may range from about 90% to about 100% by weight.

The protein(s) utilized in extrusion may be derived from a variety of suitable plants. By way of non-limiting examples, suitable plants include legumes, com, peas, canola, sunflowers, sorghum, rice, amaranth, potato, tapioca, arrowroot, canna, lupin, rape, wheat, oats, rye, barley, and mixtures thereof.

In one embodiment, the plant proteins are isolated from wheat and soybeans. In another exemplary embodiment, the plant proteins are isolated from soybeans. Suitable wheat derived protein-containing ingredients include wheat gluten, wheat flour, and mixtures thereof. Examples of commercially available wheat gluten that may be utilized include Gem of the Star Gluten, Vital Wheat Gluten (organic) each of which is available from Manildra Milling. Suitable soybean derived protein-containing ingredients ("soy protein material") include soybean protein isolate, soy protein concentrate, soy flour, and mixtures thereof, each of which are detailed below. Suitable corn derived protein-containing ingredients include corn gluten meal, for example, zein. In each of the foregoing embodiments, the soybean material may be combined with one or more ingredients selected from the group consisting of a starch, flour, gluten, a dietary fiber, and mixtures thereof.

Suitable examples of protein-containing products isolated from a variety of sources are detailed in Table III, which shows various combinations.

**Table III Protein Combinations**

| **First Protein Source** | **Second Ingredient** |
|---|---|
| soybean | wheat |
| soybean | dairy |
| soybean | egg |
| soybean | corn |
| soybean | rice |
| soybean | barley |
| soybean | sorghum |
| soybean | oat |
| soybean | millet |
| soybean | rye |
| soybean | triticale |
| soybean | buckwheat |
| soybean | pea |
| soybean | peanut |
| soybean | lentil |
| soybean | lupin |
| soybean | channa(garbonzo) |
| soybean | rapeseed (canola) |
| soybean | cassava |
| soybean | sunflower |
| soybean | whey |
| soybean | tapioca |
| soybean | arrowroot |
| soybean | amaranth |
| soybean | wheat and dairy |
| soybean | wheat and egg |
| soybean | wheat and corn |
| soybean | wheat and rice |
| soybean | wheat and barley |
| soybean | wheat and sorghum |
| soybean | wheat and oat |
| soybean | wheat and millet |
| soybean | wheat and rye |
| soybean | wheat and triticale |
| soybean | wheat and buckwheat |
| soybean | wheat and pea |
| soybean | wheat and peanut |
| soybean | wheat and lentil |
| soybean | wheat and lupin |
| soybean | wheat and channa (garbonzo) |
| soybean | wheat and rapeseed (canola) |
| soybean | wheat and cassava |
| soybean | wheat and sunflower |
| soybean | wheat and potato |
| soybean | wheat and tapioca |
| soybean | wheat and arrowroot |
| soybean | wheat and amaranth |
| soybean | corn and wheat |
| soybean | corn and dairy |
| soybean | corn and egg |
| soybean | corn and rice |
| soybean | corn and barley |
| soybean | corn and sorghum, |
| soybean | corn and oat |
| soybean | corn and millet |
| soybean | corn and rye |
| soybean | corn and triticale |
| soybean | corn and buckwheat |
| soybean | corn and pea |
| soybean | corn and peanut |
| soybean | corn and lentil |
| soybean | corn and lupin |
| soybean | corn and channa (garbonzo) |
| soybean | corn and rapeseed (canola) |
| soybean | corn and cassava |
| soybean | corn and sunflower |
| soybean | corn and potato |
| soybean | corn and tapioca |
| soybean | corn and arrowroot |
| soybean | corn and amaranth |

In each of the embodiments delineated in Table III, the combination of protein-containing products may be combined with one or more ingredients selected from the group consisting of a starch, flour, gluten, a dietary fiber, and mixtures thereof. In one embodiment, the protein-containing product comprises protein, starch, gluten, and fiber. In an exemplary embodiment, the protein-containing product comprises from about 45% to about 65% soy protein on a dry matter basis; from about 20% to about 30% wheat gluten on a dry matter basis; from about 10% to about 15% wheat starch on a dry matter basis; and from about 1% to about 5% fiber on a dry matter basis. In each of the foregoing embodiments, the protein-containing product may comprise dicalcium phosphate, L-cysteine or combinations of both dicalcium phosphate and L-cysteine.

### soy protein product

In an exemplary embodiment, as detailed above, soy protein isolate, soy protein concentrate, soy flour, and mixtures thereof may be utilized as the protein-containing products in the extrusion process. The soy protein products may be derived from whole soybeans in accordance with methods generally known in the art. The whole soybean may be standard soybeans (i.e., non-genetically modified soybeans), commoditized soybeans, genetically modified soybeans, and combinations thereof.

Generally speaking, when soy isolate is used, an isolate is preferably selected that is not a highly hydrolyzed soy protein isolate. In certain embodiments, highly hydrolyzed soy protein isolates, however, may be used in combination with other soy protein isolates provided that the highly hydrolyzed soy protein isolate content of the combined soy protein isolates is generally less than about 40% of the combined soy protein isolates, by weight. Additionally, the soy protein isolate utilized preferably has an emulsion strength and gel strength sufficient to enable the protein in the isolate to form fibers that are substantially aligned upon extrusion. Examples of soy protein isolates that are useful in the present invention are commercially available, for example, from Solae, LLC (St. Louis, Mo.), and include SUPRO^{®} 500E, SUPRO^{®} EX 33, SUPRO^{®} 620, SUPRO^{®} 630, and SUPRO^{®} 545. In an exemplary embodiment, a form of SUPRO^{®} 620 is utilized as detailed in Example 5.

Alternatively, soy protein concentrate may be blended with the soy protein isolate to substitute for a portion of the soy protein isolate as a source of soy protein product. Typically, if a soy protein concentrate is substituted for a portion of the soy protein isolate, the soy protein concentrate is substituted for up to about 40% of the soy protein isolate by weight, at most, and more preferably is substituted for up to about 30% of the soy protein isolate by weight. Examples of suitable soy protein concentrates useful in the invention include Promine DSPC, Procon, Alpha 12 and Alpha 5800, which are commercially available from Solae, LLC (St. Louis, Mo.).

Soy cotyledon fiber may optionally be utilized as a fiber source. Typically, suitable soy cotyledon fiber will generally effectively bind water when the mixture of soy protein and soy cotyledon fiber is co-extruded. In this context, "effectively bind water" generally means that the soy cotyledon fiber has a water holding capacity of at least 5.0 to about 8.0 grams of water per gram of soy cotyledon fiber, and preferably the soy cotyledon fiber has a water holding capacity of at least about 6.0 to about 8.0 grams of water per gram of soy cotyledon fiber. Soy cotyledon fiber may generally be present in the soy protein product in an amount ranging from about 1% to about 20%, preferably from about 1.5% to about 20% and most preferably, at from about 2% to about 5% by weight on a moisture free basis. Suitable soy cotyledon fiber is commercially available. For example, FIBRIM^{®} 1260 and FIBRIM^{®} 2000 are soy cotyledon fiber materials that are commercially available from Solae, LLC (St. Louis, Mo.).

### additional ingredients

A variety of additional ingredients may be added to any of the protein-containing products detailed above without departing from the scope of the invention. For example, antioxidants, antimicrobial agents, and combinations thereof may be included. Antioxidant additives include BHA, BHT, TBHQ, vitamins A, C and E and derivatives thereof. Additionally, various plant extracts such as those containing carotenoids, tocopherols or flavonoids having antioxidant properties, may be included to increase the shelf-life or nutritionally enhance the protein compositions. The antioxidants and the antimicrobial agents may have a combined presence at levels of from about 0.01% to about 10%, preferably, from about 0.05% to about 5%, and more preferably from about 0.1% to about 2%, by weight of the protein-containing materials.

### moisture content

As will be appreciated by the skilled artisan, the moisture content of the protein-containing products and optional additional ingredients can and will vary. The purpose of the water is to hydrate the ingredients of the protein composition. Generally speaking, the moisture content may range from about 1% to about 80% by weight. In low moisture extrusion applications, the moisture content of the protein-containing products may range from about 1% to about 35% by weight. Alternatively, in high moisture extrusion applications, the moisture content of the protein-containing products may range from about 35% to about 80% by weight. In an exemplary embodiment, the extrusion application utilized to form the extrudates is low moisture. An exemplary example of a low moisture extrusion process to produce extrudates having proteins with fibers that are substantially aligned is detailed in Example 5.

### extrusion of the protein-containing material

A suitable extrusion process for the preparation of structured protein materials comprises introducing the protein product, and other ingredients into a mixing vessel (i.e., an ingredient blender) to combine the ingredients and form a dry blended protein product pre-mix. The dry blended protein product pre-mix may be transferred to a hopper from which the dry blended ingredients are introduced along with moisture into a pre-conditioner to form a conditioned protein product mixture. The conditioned product is then fed to an extruder in which the mixture is heated under mechanical pressure generated by the screws of the extruder to form a molten extrusion mass. Alternatively, the dry blended protein product pre-mix may be directly fed to an extruder in which moisture and heat are introduced to form a molten extrusion mass. The molten extrusion mass exits the extruder through an extrusion die assembly forming an extrudate comprising structured protein materials having protein fibers that are substantially aligned.

### extrusion process conditions

Among the suitable extrusion apparatuses useful in the practice of the present invention is a double barrel, twin-screw extruder as described, for example, in U.S. Patent No. 4,600,311. Further examples of suitable commercially available extrusion apparatuses include a CLEXTRAL Model BC-72 extruder manufactured by Clextral, Inc. (Tampa, Florida); a WENGER Model TX-57 extruder, a WENGER Model TX-168 extruder, and a WENGER Model TX-52 extruder all manufactured by Wenger Manufacturing, Inc. (Sabetha, Kansas). Other conventional extruders suitable for use in this invention are described, for example, in U.S. Pat. Nos. 4,763,569, 4,118,164, and 3,117,006, which are hereby incorporated by reference in their entirety.

The screws of a twin-screw extruder can rotate within the barrel in the same or opposite directions. Rotation of the screws in the same direction is referred to as single flow whereas rotation of the screws in opposite directions is referred to as double flow. The speed of the screw or screws of the extruder may vary depending on the particular apparatus; however, it is typically from about 250 to about 400 revolutions per minute (rpm). Generally, as the screw speed increases, the density of the extrudate will decrease. The extrusion apparatus contains screws assembled from shafts and worm segments, as well as mixing lobe and ring-type shearlock elements as recommended by the extrusion apparatus manufacturer for extruding plant protein product.

The extrusion apparatus generally comprises a plurality of temperature controlled zones through which the protein product mixture is conveyed under mechanical pressure prior to exiting the extrusion apparatus through an extrusion die assembly. The temperature in each successive heating zone generally exceeds the temperature of the previous heating zone by between about 10°C and about 70°C. In one embodiment, the conditioned pre-mix is transferred through four heating zones within the extrusion apparatus, with the protein product mixture heated to a temperature of from about 100°C to about 150°C such that the molten extrusion mass enters the extrusion die assembly at a temperature of from about 100°C to about 150°C.

The barrel pressure is dependent on numerous factors including, for example, the extruder screw speed, feed rate of the mixture to the barrel, feed rate of water to the barrel, and the viscosity of the molten mass within the barrel.

Water may be injected into the extruder barrel to hydrate the protein product mixture and promote texturization of the proteins. As an aid in forming the molten extrusion mass, the water may act as a plasticizing agent. Water may be introduced to the extruder barrel via one or more injection jets in communication with a heating zone. Typically, the mixture in the barrel contains from about 1% to about 30% by weight water. In one embodiment, the mixture in the barrel contains from about 5% to about 20% by weight water. The rate of introduction of water to any of the heating zones is generally controlled to promote production of an extrudate having desired characteristics. It has been observed that as the rate of introduction of water to the barrel decreases, the density of the extrudate decreases.

### optional preconditioning

In a pre-conditioner, the protein-containing product and optional additional ingredients (protein-containing product mixture) are preheated, contacted with moisture, and held under temperature and pressure conditions to allow the moisture to penetrate and soften the individual particles. The preconditioning step increases the bulk density of the particulate fibrous material mixture and improves its flow characteristics. The preconditioner contains one or more paddles to promote uniform mixing of the protein and transfer of the protein mixture through the preconditioner. The configuration and rotational speed of the paddles vary widely, depending on the capacity of the preconditioner, the extruder throughput and/or the desired residence time of the mixture in the preconditioner or extruder barrel. Generally, the speed of the paddles is from about 500 to about 1300 revolutions per minute (rpm).

Typically, the protein-containing product mixture is pre-conditioned prior to introduction into the extrusion apparatus by contacting the pre-mix with moisture (i.e., steam and/or water). Preferably the protein-containing mixture is heated to a temperature of from about 20°C to about 60°C, more preferably from about 30°C to about 45°C in the preconditioner.

Typically, the protein-containing product pre-mix is conditioned for a period of about 0.5 minutes to about 10.0 minutes, depending on the speed and the size of the pre-conditioner. In an exemplary embodiment, the protein-containing product pre-mix is conditioned for a period of about 3.0 minutes to about 5.0 minutes. The pre-mix is contacted with steam and/or water and heated in the pre-conditioner at generally constant steam flow to achieve the desired temperatures. The water and/or steam conditions (i.e., hydrates) the pre-mix, increases its density, and facilitates the flowability of the dried mix without interference prior to introduction to the extruder barrel where the proteins are texturized. If low moisture pre-mix is desired, the conditioned pre-mix may contain from about 1% to about 35% (by weight) water. If high moisture pre-mix is desired, the conditioned pre-mix may contain from about 35% to about 80% (by weight) water.

The conditioned pre-mix typically has a bulk density of from about 0.25 g/cm³ to about 0.60 g/cm³. Generally, as the bulk density of the pre-conditioned protein product mixture increases within this range, the protein product mixture is easier to process. This is presently believed to be due to such mixtures occupying all or a majority of the space between the screws of the extruder, thereby facilitating conveying the extrusion mass through the barrel.

### extrusion process

The dry pre-mix or the conditioned pre-mix is then fed into an extruder to heat, shear, and ultimately plasticize the mixture. The extruder may be selected from any commercially available extruder and may be a single screw extruder or preferably a twin-screw extruder that mechanically shears the mixture with the screw elements.

The rate at which the pre-mix is generally introduced to the extrusion apparatus will vary depending upon the particular apparatus. Generally, the pre-mix is introduced at a rate of no more than about 25 kilograms per minute. Generally, it has been observed that the density of the extrudate decreases as the feed rate of pre-mix to the extruder increases.

The pre-mix is subjected to shear and pressure by the extruder to plasticize the mixture. The screw elements of the extruder shear the mixture as well as create pressure in the extruder by forcing the mixture forwards though the extruder and through the die assembly. The screw motor speed determines the amount of shear and pressure applied to the mixture by the screw(s). Preferably, the screw motor speed is set to a speed of from about 200 rpm to about 500 rpm, and more preferably from about 300 rpm to about 400 rpm, which moves the mixture through the extruder at a rate of at least about 20 kilograms per hour and more preferably at least about 40 kilograms per hour. Preferably the extruder generates an extruder barrel exit pressure of from about 500 to about 1500 psig, and more preferably an extruder barrel exit pressure of from about 600 to about 1000 psig is generated.

The extruder heats the mixture as it passes through the extruder denaturing the protein in the mixture. The extruder includes a means for heating and/or cooling the mixture to temperatures of from about 100°C to about 180°C. Preferably, the means for heating or cooling the mixture in the extruder comprises extruder barrel jackets into which heating or cooling media such as steam or water may be introduced to control the temperature of the mixture passing through the extruder. The extruder may also include steam injection ports for directly injecting steam into the mixture within the extruder. The extruder preferably includes multiple heating zones that can be controlled to independent temperatures, where the temperatures of the heating zones are preferably set to increase the temperature of the mixture as it proceeds through the extruder. In one embodiment, the extruder may be set in a four temperature zone arrangement, where the first zone (adjacent the extruder inlet port) is set to a temperature of from about 80°C to about 100°C, the second zone is set to a temperature of from about 100°C to 135°C, the third zone is set to a temperature of from 135°C to about 150°C, and the fourth zone (adjacent the extruder exit port) is set to a temperature of from 150°C to 180°C. The extruder may be set in other temperature zone arrangements, as desired. In another embodiment, the extruder may be set in a five temperature zone arrangement, where the first zone is set to a temperature of about 25°C, the second zone is set to a temperature of about 50°C, the third zone is set to a temperature of about 95°C, the fourth zone is set to a temperature of about 130°C, and the fifth zone is set to a temperature of about 150°C. In still another embodiment, the extruder may be set in a six temperature zone arrangement, where the first zone is set to a temperature of about 90°C, the second zone is set to a temperature of about 100°C, the third zone is set to a temperature of about 105°C, the fourth zone is set to a temperature of about 100°C, the fifth zone is set to a temperature of about 120°C, and the sixth zone is set to a temperature of about 130°C.

The mixture forms a melted plasticized mass in the extruder. A die assembly is attached to the extruder in an arrangement that permits the plasticized mixture to flow from the extruder exit port into the die assembly and produces substantial alignment of the protein fibers within the plasticized mixture as it flows through the die assembly. The die assembly may include either a faceplate die or a peripheral die. The cutter speed is set to size the piece to no more than 5% through a 16 mesh screen, and no more than 65% on a ½-inch screen.

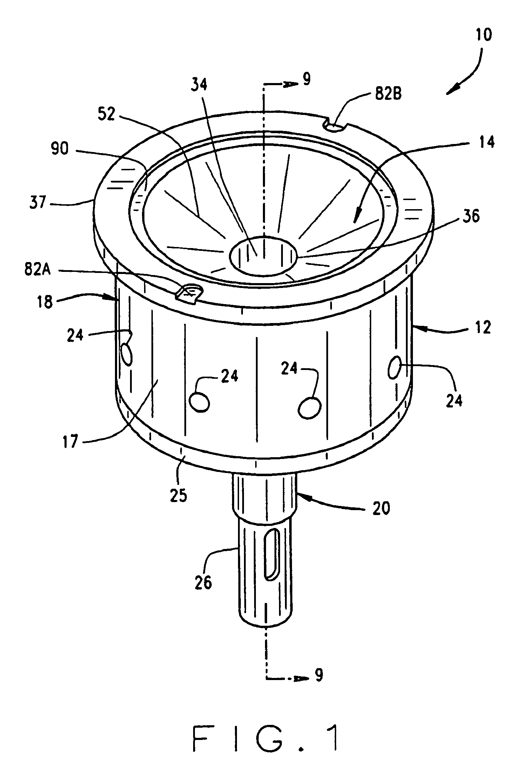

Referring to the drawings, one embodiment of the peripheral die assembly is illustrated and generally indicated as 10 in FIG. 1. The peripheral die assembly 10 may be used in an extrusion process for extruding an extrusion, such as a vegetable protein-water mixture, in a manner that causes substantial parallel alignment of the protein fibers of the extrusion as shall be discussed in greater detail below. In the alternative, the extrusion may be made from a meat and/or vegetable protein-water mixture.

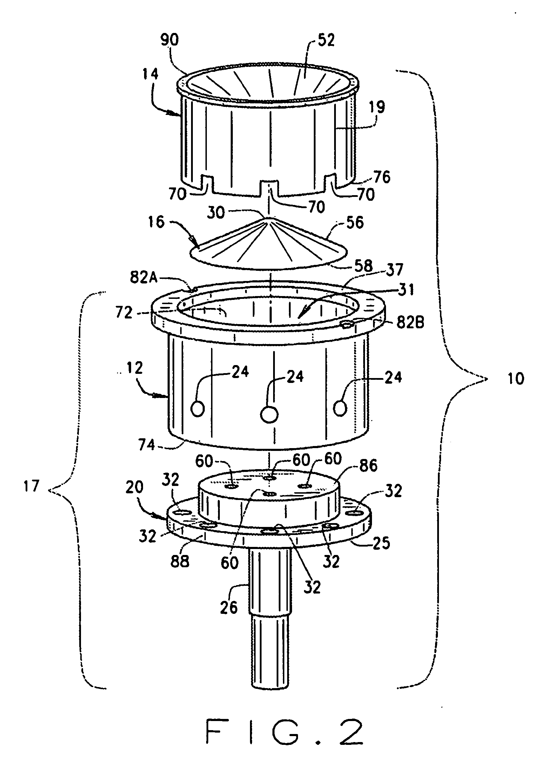

As shown in FIGS. 1 and 2, the peripheral die assembly 10 may include a die sleeve 12 having a cylindrical-shaped two-part sleeve die body 17. The sleeve die body 17 may include a rear portion 18 coupled to an end plate 20 that collectively define an internal area 31 in communication with opposing openings 72, 74. The die sleeve 12 may be adapted to receive a die insert 14 and a die cone 16 for providing the necessary structural elements to facilitate substantially parallel flow of the extrusion through the peripheral die assembly 10 during the extrusion process.

In one embodiment, the end plate 20 of the die sleeve 12 may be secured to a die cone 16 adapted to interface with the die insert 14 when the end plate 20 is secured to the rear portion 18 of the die sleeve 12 during assembly of the peripheral die assembly 10. As further shown, the rear portion 18 of die sleeve 12 defines a plurality of circular-shaped outlets 24 along the sleeve body 17 which are adapted to provide a conduit for the egress of extrusion from the peripheral die assembly 10 during the extrusion process. In the alternative, the plurality of outlets 24 may have different configurations, such as square, rectangular, scalloped or irregular. As further shown, the rear portion 18 of the die sleeve 12 may include a circular flange 37 that surrounds opening 72 and defines a pair of opposing slots 82A and 82B that are used to properly align the die sleeve 12 when engaging the die sleeve 12 to the extruding apparatus (not shown).

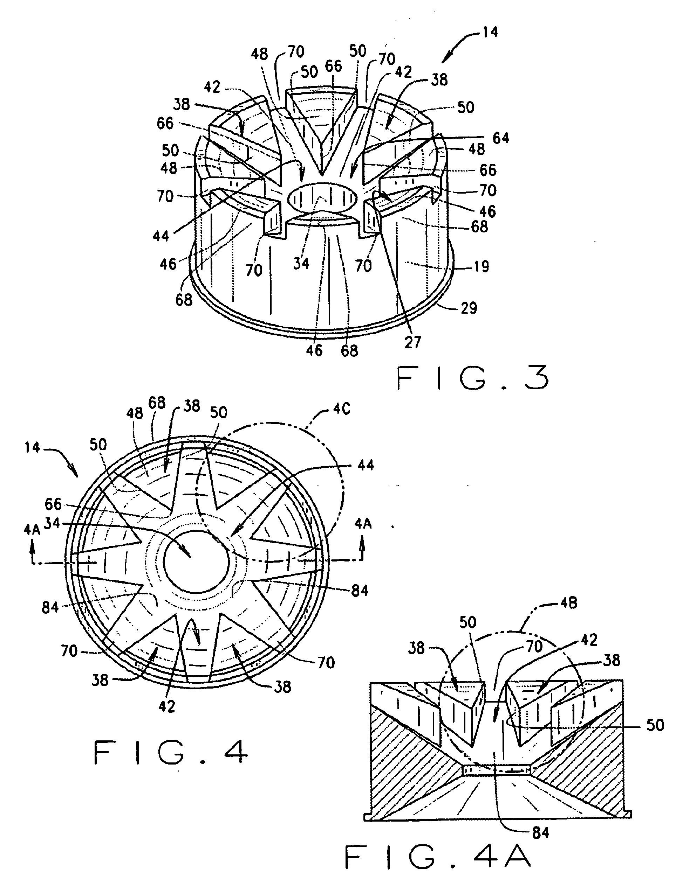

Referring to FIGS. 3-5, one embodiment of the die insert 14 may include a cylindrical-shaped die insert body 19 having a front face 27 in communication with an opposing rear face 29 through a throat 34 defined between the rear and front faces 27, 29. The front face 27 of the die insert 14 may define a slanted bottom portion 64 in communication with a plurality of raised flow diverters 38 that are spaced circumferentially around the front face 27 of the die insert body 19 and which surrounds an inner space 44 that communicates with throat 34. In one embodiment, the flow diverters 38 may have a pie-shaped configuration, although other embodiments may have other configurations adapted to divert and funnel the flow of the extrusion through the outlets 24 of the peripheral die assembly 10. In addition, the front face 27 of the die insert 14 defines a plurality of openings 70 adapted to communicate with a respective outlet 24 with the openings 70 being circumferentially spaced around the peripheral edge of the die insert 14.

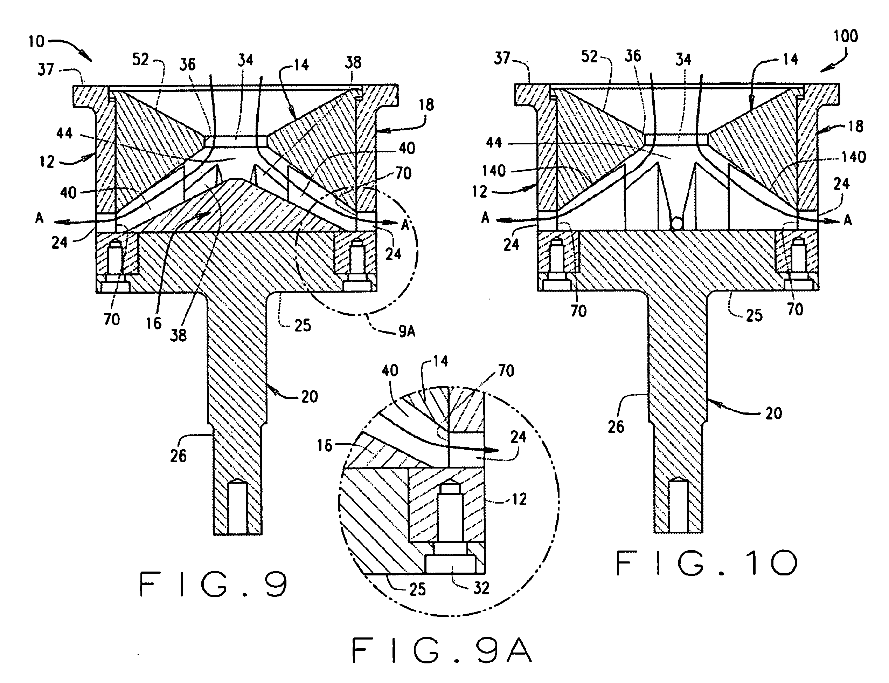

Referring to FIGS. 1 and 2, the throat 34 defined between the rear and front faces 27, 29 of the die insert 14 communicates with an opening 36 (FIG. 9) which is in communication with a well 52 defined along the rear face 29 of die insert body 19. In one embodiment, the well 52 has a generally bowl-shaped configuration surrounded by a flange 90. The well 52 may be adapted to permit the extrusion to enter the throat 34 and flow into the inner space 44 (FIG. 3) through opening 36 having substantially parallel flow as the extrusion enters the die insert 14 from an extrusion apparatus (not shown). In other embodiments, the well 52 may be sized and shaped to different configurations suitable for permitting substantially parallel flow of the extrusion through the throat 34 as the extrusion enters the front face 29 of the die insert 14.

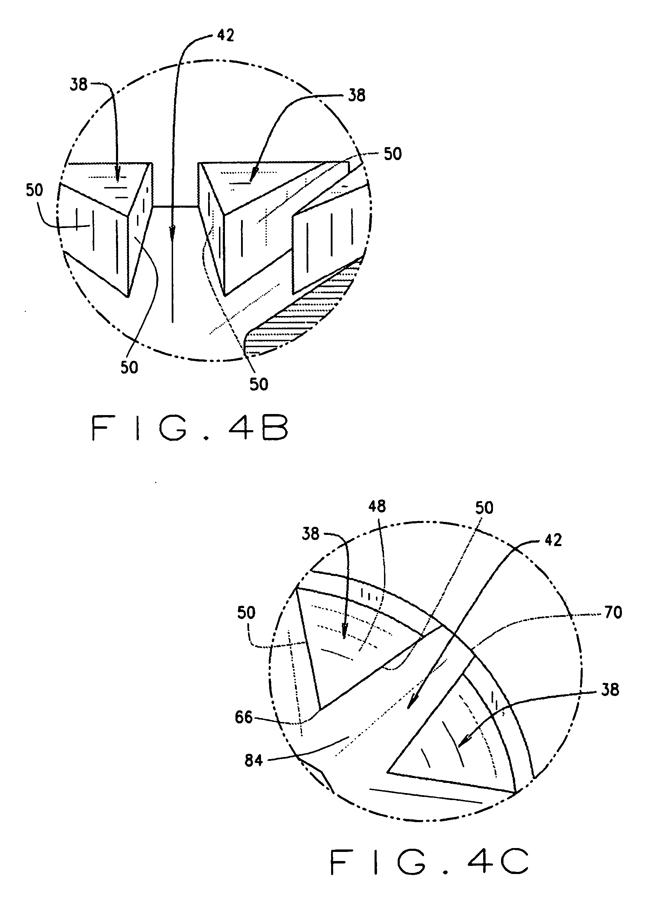

As shown specifically in FIGS. 3, 4 and 4A, each flow diverter 38 has a raised configuration defining a curved back portion 68 having a beveled peripheral edge 46 in communication with opposing side walls 50 that meet at an apex 66. In addition, each flow diverter 38 defines a pie-shaped surface 48 adapted to interface with die cone 16. As further shown, the opposing side walls 50 of adjacent flow diverters 38 and the bottom portion 64 of the die insert 14 collectively define a tapered flow pathway 42 that forms a portion of a flow channel 40 when the peripheral die assembly 10 is fully assembled. The flow pathway 42 may be in communication with an entrance 84 at one end and a respective outlet 24 at a terminal end of the flow pathway 42.

As further shown, each flow pathway 42 has a three-sided tapered configuration collectively defined between the opposing side walls 50 of adjacent flow diverters 38 and the slanted configuration of bottom portion 64 of the die insert 14. In one embodiment, this three-sided tapered configuration gradually tapers inwardly on all three sides of the flow pathway 42 from the entrance 84 to the outlet 24.

In an embodiment, the front face 27 of the die insert 14 may include eight flow diverters 38 that define a respective flow pathway 42 between adjacent flow diverters 38 for a total of eight flow pathways 42. However, other embodiments may define at least two or more flow diverters 38 circumferentially spaced around the peripheral edge of the 76 of the die insert 14 in order to provide at least two or more flow pathways 42 along the front face 27 of the die insert 14.

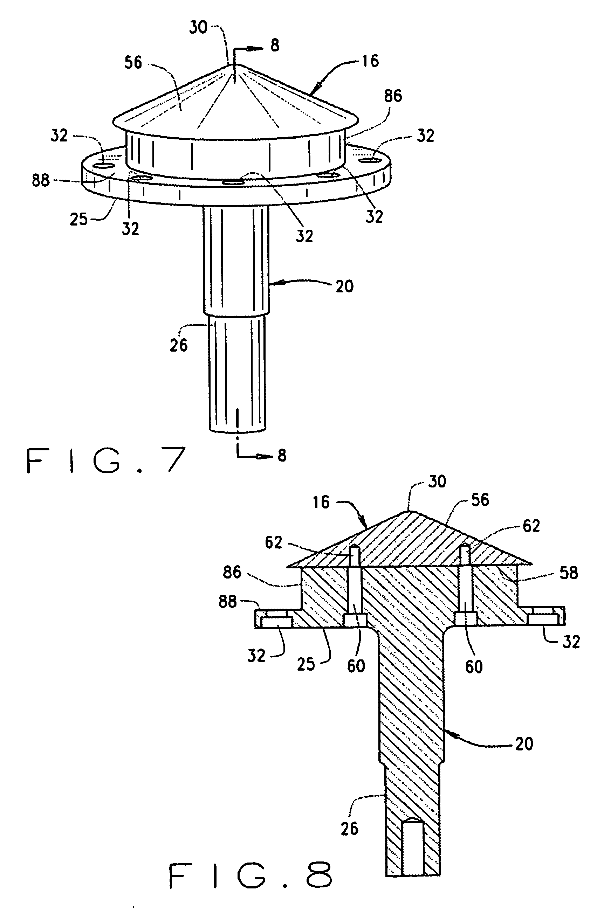

As shown in FIGS. 7 and 8, the end plate 20 of the die sleeve 12 may include a post 26 secured to the die cone 16 through a circular-shaped plate 25. The die cone 16 may define a conical side 56 and an opposite flat side 58. In an embodiment, the conical side 56 of the die cone 16 may have a conical-shaped configuration having an apex 30; however, the die cone 16 may have other suitable shapes, such as generally spherical or rounded configurations. In one embodiment, the flat side 58 of the die cone 16 may be secured to the end plate 20 of the die sleeve 12 when assembling the peripheral die assembly 10.

Referring to FIGS. 2 and 8, the flat side 58 of the die cone 16 may be secured to the end plate 20 of die sleeve 12 that includes a circular-shaped plate 25 and post 26. The circular-shaped plate 25 has a base plate 86 that defines a plurality of channels 60 that correspond to a plurality of respective recesses 62 defined along the opposite flat side 58 of the die cone 16. In particular, the channels 60 and recesses 62 are adapted to receive corresponding bolts or the like (not shown) that secure the circular-shaped plate 25 to the die cone 16. In addition, the circular-shaped plate 25 defines a plate flange 88 that surrounds the plate base 86. In another embodiment, the post 26 may be a separate structural element adapted to be secured to the plate 25 using a thread and bolt arrangement.

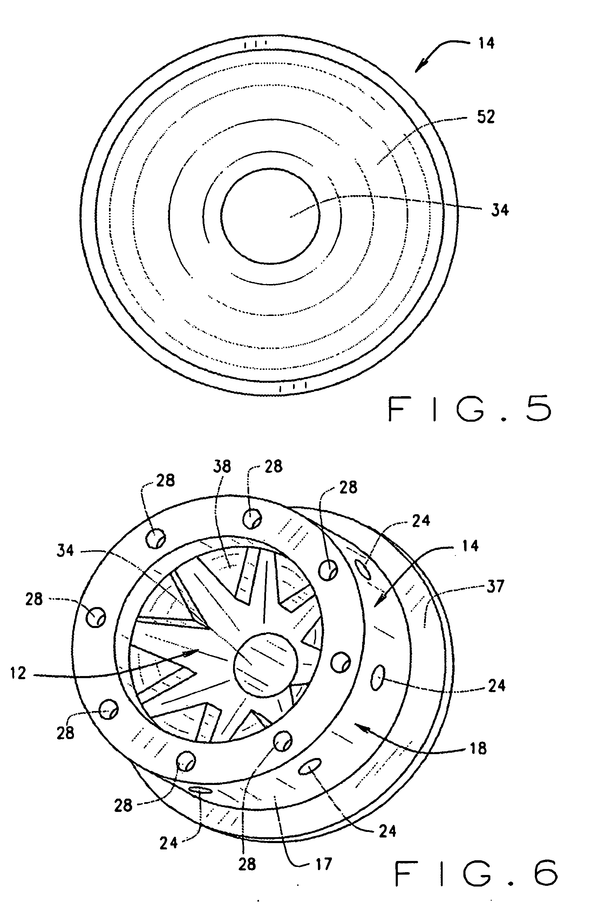

Referring to FIGS. 6, 7, 8 and 11, the rear portion 18 of die sleeve 12 defines a plurality of circumferentially-spaced holes 28, while the plate flange 88 of die sleeve 12 defines a corresponding plurality of circumferentially-spaced channels 32 with a hole 28 adapted to be aligned with a respective channel 32. A corresponding number of bolts or the like (not shown) may be adapted for insertion through a respective aligned hole 28 and channel 32 in order to secure the rear portion 18 to the end plate 20 of the die sleeve 12 during assembly of the peripheral die assembly 10.

Referring to FIG. 9, when the peripheral die assembly 10 is fully assembled the die insert 14 is disposed within the rear portion 18 of the die sleeve 12 which is secured to the end plate 20 of the die sleeve 12 such that the conical side 56 of the die cone 16 is oriented toward the area 31 and encased between the rear and front portions 18 and 20. In this orientation, the conical side 56 is operatively associated with the front face 27 of the die insert 14. As such, the opposing side walls 50 of each adjacent flow diverter 38, the bottom portion 64 of the die insert 14, and the conical side 56 of the die cone 16 collectively define a respective flow channel 40 in communication with a respective outlet 24. The flow channel 40 defined between the die sleeve 12, die insert 14 and die cone 16 as described above may be tapered on all four sides of the flow channel 40. Accordingly, the flow channel 40 gradually tapers inwardly on all four sides from the entrance 84 to the outlet 24 of each flow channel 40.

Referring to FIG. 9A, an enlarged view illustrating the flow pathway A through flow channel 40 is shown. Specifically, flow channel 40 communicates with the outlet 24 through opening 70 defined by the die insert 14. In one embodiment, the transition from the opening 70 to the outlet 24 is seamless such that the meat and/or vegetable protein-water mixture that is extruded from the peripheral die assembly 10 has fibers that are substantially aligned.

During the extrusion process, the peripheral die assembly 10 may be operatively engaged with an extruding apparatus (not shown) that produces an extrusion that contacts the well 52 defined by the rear face 29 of the die insert 14 and flows into the throat 34 and enters the inner space opening 36 as indicated by flow path A. The extrusion may enter the inner space 44 defined by the die insert 14 and enter the entrance 84 of each tapered flow channel 42. As noted above, the extrusion then flows through each flow channel 42 and exits from a respective outlet 24 in a manner that causes the substantial alignment of the vegetable protein fibers in the extrusion produced by the peripheral die assembly 10.

The width and height dimensions of the outlet(s) 24 are selected and set prior to extrusion of the mixture to provide the fibrous material extrudate with the desired dimensions. The width of the outlet(s) 24 may be set so that the extrudate resembles from a cubic chunk of meat to a steak filet, where widening the width of the outlet(s) 24 decreases the cubic chunk-like nature of the extrudate and increases the filet-like nature of the extrudate. In an exemplary embodiment, the width of the outlet(s) 24 may be set to a width of from about 10 millimeters to about 40 millimeters.

The height dimension of the outlet(s) 24 may be set to provide the desired thickness of the extrudate. The height of the outlet(s) 24 may be set to provide a very thin extrudate or a thick extrudate. For example, the height of the outlet(s) 24 may be set to from about 1 millimeter to about 30 millimeters. In an exemplary embodiment, the height of the outlet(s) 24 may be set to from about 8 millimeters to about 16 millimeters.

It is also contemplated that the outlet(s) 24 may be round. The diameter of the outlet(s) 24 may be set to provide the desired thickness of the extrudate. The diameter of the outlet(s) 24 may be set to provide a very thin extrudate or a thick extrudate. For example, the diameter of the outlet(s) 24 may be set to from about 1 millimeter to about 30 millimeters. In an exemplary embodiment, the diameter of the outlet(s) 24 may be set to from about 8 millimeters to about 16 millimeters.

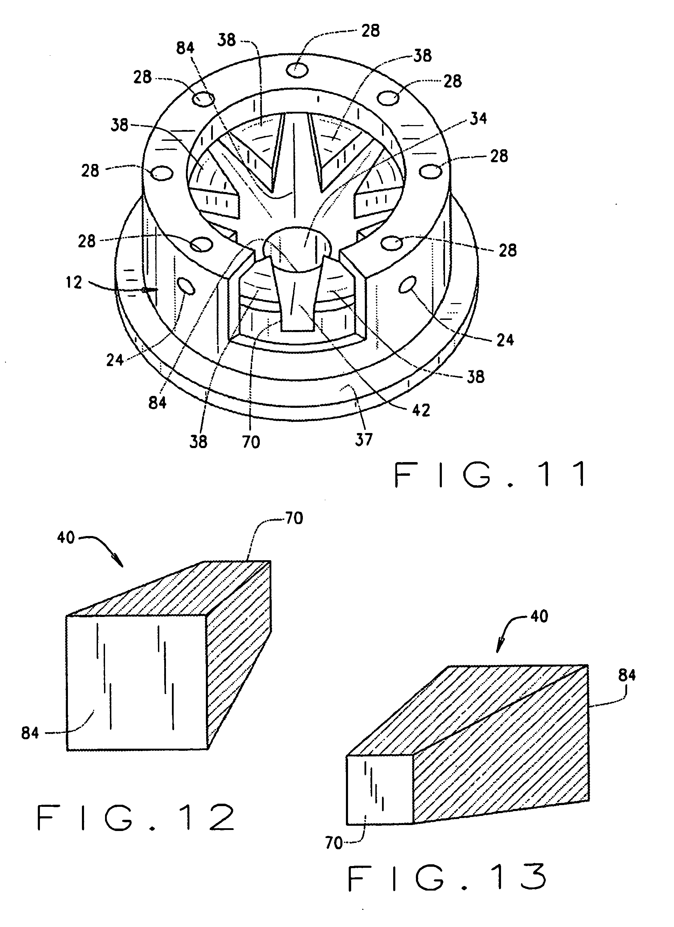

Referring to FIGS. 12 and 13, the shape and size of the flow channel 40 is illustrated that shows the four way tapered configuration of each flow channel 40. As shown, the flow channel 40 gradually tapers along all four sides from the entrance 84 to the opening 70 of the flow channel 40 in a manner that promotes substantially parallel flow of the extrusion. In addition, the entrance 84 may have a greater cross-sectional area than the outlet 70 in order to promote the gradual tapering of the flow channel 40 described above.

In an alternative embodiment shown in FIG. 10, the peripheral die assembly 100 may include a die sleeve 12 operatively engaged to a die insert 14 that are similar in construction and assembly as found in the embodiment of the peripheral die assembly 10. However, the peripheral die assembly 100 of this embodiment lacks the die cone 16 such that a larger tapered flow channel 140 is defined between the die sleeve 12 and die insert 14.

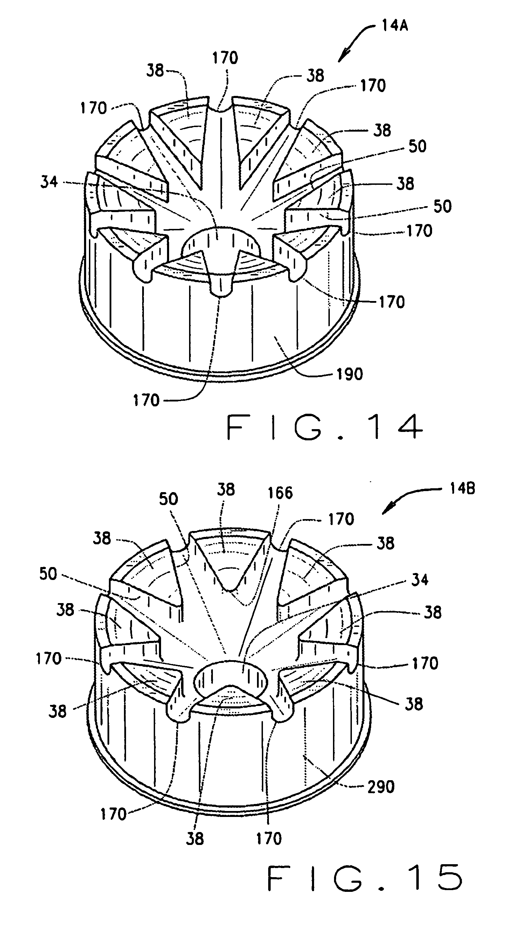

In one embodiment shown in FIG. 14, a die insert designated 14A, may define a body 190 having a plurality of flow diverters 38 that are circumferentially spaced around the die insert 14A. The opposing walls 50 of each adjacent flow diverter 38 collectively define a gradually tapered flow pathway in communication with a scalloped opening 170 defined at each end of the flow pathway. In addition, the die insert 14A may define ten flow diverters 38. In another embodiment shown in FIG. 15, a die insert designated 14B, may define a body 290 having eight flow diverters 38 that are also circumferentially spaced around the die insert 14B. Further, each flow diverter 38 has a rounded apex 166, rather than a pointed apex 66 defined by the other embodiments of the die insert.

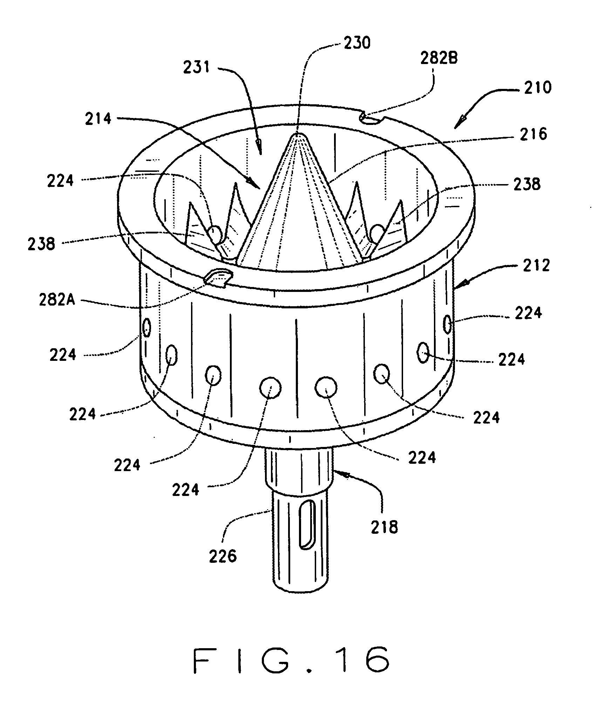

Another aspect of the peripheral die assembly, designated 210, is shown in FIGS. 16-22. As described above for the other aspects, the peripheral die assembly 210 may be used in an extrusion process for extruding an extrusion, such as a vegetable protein-water mixture, in a manner that causes substantial alignment of the protein fibers of the extrusion. In this embodiment, peripheral die assembly 210 includes a cylindrical-shaped die hollow sleeve 212 having an interior wall 266 that defines an interior area 231 adapted to receive a die insert 214 therein. The interior area 231 communicates with a proximal opening 272 at one end of die sleeve 212 and a distal opening 274 at the opposite end thereof adapted to receive an end plate 218 engaged to the die insert 214.

Referring to FIG. 16, the die sleeve 212 also includes a plurality of circular-shaped outlets 224 equidistantly spaced along the body of the die sleeve 212. The plurality of outlets 224 act as individual conduits that communicate with the interior area 231 for permitting formation of the extrusion as the extrusion exits each respective outlet 224 as shall be discussed in greater detail below. In the alternative, the plurality of outlets 224 may have different configurations, such as square, rectangular, scalloped or irregular. As further shown, a circular-shaped flange 237 surrounds proximal opening 272 and defines a pair of opposing slots 282A and 282B that are used to properly align the die sleeve 212 when engaging the die sleeve 212 to the extruding apparatus (not shown).

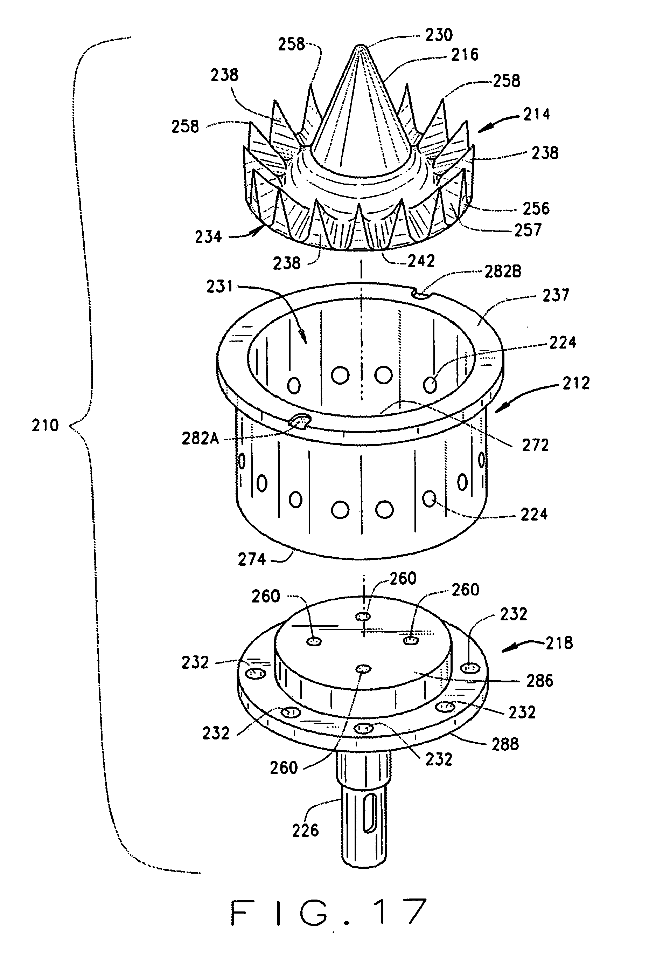

The die sleeve 212 controls the flow of extrusion through the peripheral die assembly 210 and is adapted to receive the die insert 214 for providing the necessary structural elements required to facilitate substantial alignment of the protein fibers of the extrusion as the extrusion passes through the peripheral die assembly 210 during the extrusion process. Referring to FIGS. 17-20, the die insert 214 includes a circular-shaped base 234 that has one side defining a plurality of raised circumferentially-spaced flow diverters 238 and an opposite side that defines a plurality of holes 262 adapted to engage the end plate 218 to the die insert 214. In one embodiment, the die insert 214 may have sixteen flow diverters 238, although it is contemplated that other embodiments may have any of a plurality of flow diverters 238.

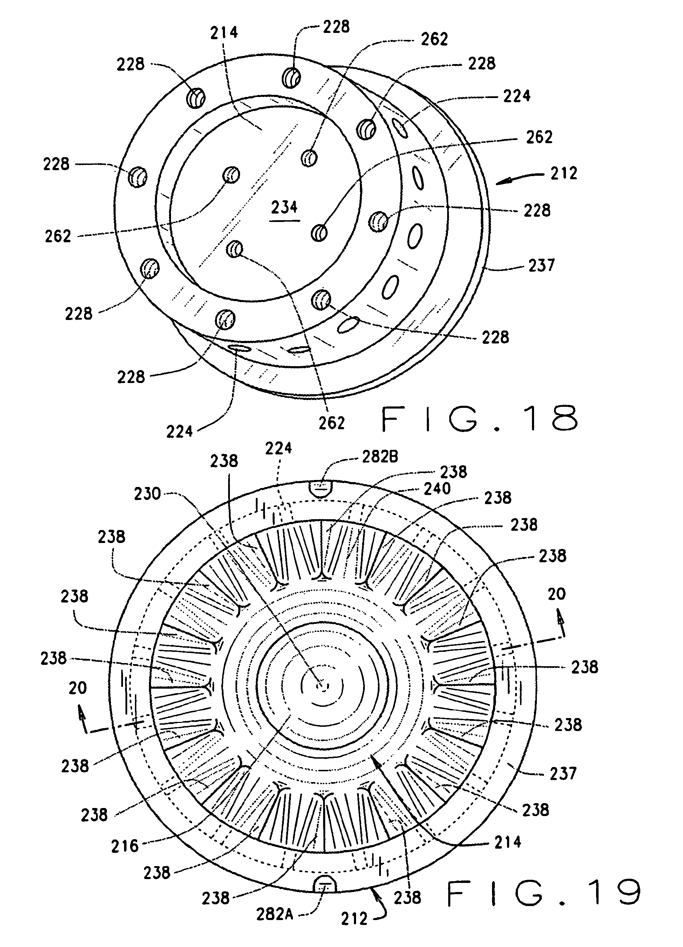

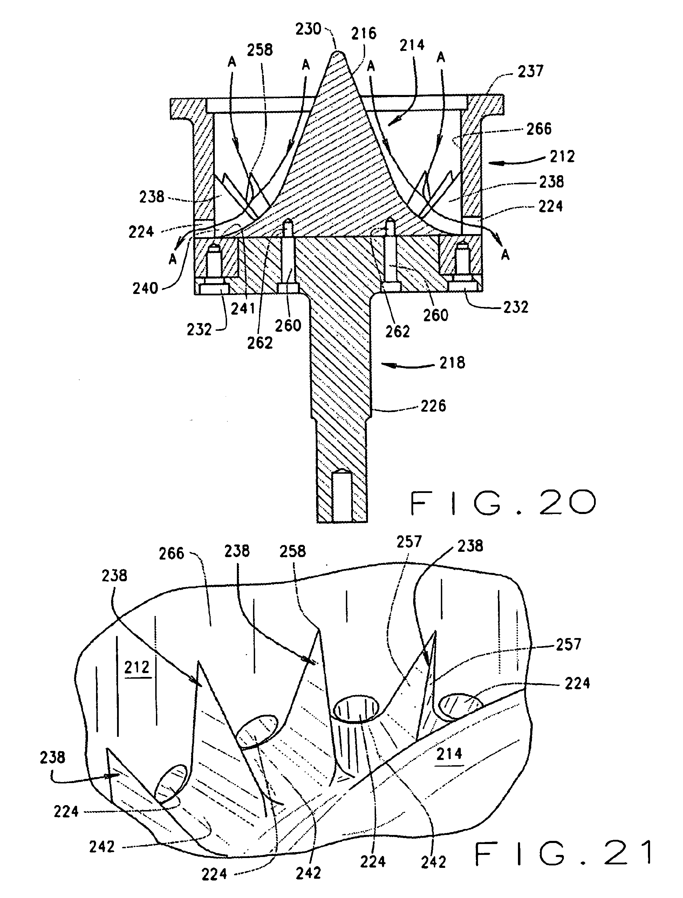

As shown in FIGS. 19 and 21, each of the plurality of raised circumferentially-spaced flow diverters 238 defines opposing tapered side portions 257 that meet at an edge 258 and a back portion 256 that contacts the inner wall 266 of the die sleeve 212 when the die insert 214 is disposed within the interior area 231 and engaged to the die sleeve 212. As illustrated, opposite side portions 257 gradually taper downward to meet and define a flow pathway 240 between each respective flow diverter 238. The flow pathways communicate with a respective outlet 224 for the flow of extrusion that exits the peripheral die assembly 210 during the extrusion process. In the embodiment of the die insert 214 having sixteen flow diverters 238, there will be the same number of flow pathways 240 defined around the circumference of the base 234 which correspond to a respective outlet 224.

Referring to FIGS. 17 and 20, the end plate 218 includes a circular-shaped portion 286 adapted to engage the base 234 of the sleeve insert 214 during assembly of the peripheral die assembly 210. The end plate 218 further includes a flange 288 surrounding the circular-shaped portion 286 and a post 226 that extends axially from the end plate 218. As discussed above, the circular-shaped member 286 defines a plurality of holes 260 that correspond to a plurality of holes 262 of the sleeve insert 214 (FIG. 20) adapted receive a bolt (not shown) for securing the end plate 218 to the die insert 214. Similarly, the flange 288 defines a plurality of equidistantly-spaced apertures 232 that correspond to holes 228 defined around the distal opening 274 of the die sleeve 212 for securing the end plate 218 to the die sleeve 212 with bolts (not shown).

During assembly of the peripheral die assembly 210, the die insert 214 is disposed inside the interior area 231 such that the die insert 214 abuts a shoulder 241 of the die sleeve 212. In this orientation, the back portions 256 of each flow diverter 238 contact the inner wall 266 of the die sleeve 212 in a fluid tight seal. The end plate 218 is then engaged to the base 234 of the die insert 214 by aligning the holes 260 of the end plate 218 with the holes 262 of the die insert which concurrently aligns the holes 228 of the die sleeve 212 with holes 232 of the end plate 218. The bolts are then inserted through the aligned holes 228, 232, 260 and 262 such that the die sleeve 212, die insert 218 and end plate 218 are engaged to one another, thereby completing the assembly of the peripheral die assembly 210.

The plurality of raised, circumferentially-spaced diverters 238 surround a cone portion 216 that extends outwardly through the proximal opening 272 of the die sleeve 212 when the peripheral die assembly 210 is assembled. As shown, the cone portion 216 defines tapered sides that meet at an apex 230 for promoting the flow of extrusion toward the plurality of outlets 224. As illustrated, one end of the flow pathway 240 communicates with the bottom portion of the cone portion 216 while the opposite end of the flow pathway 240 communicates with a respective outlet 224.

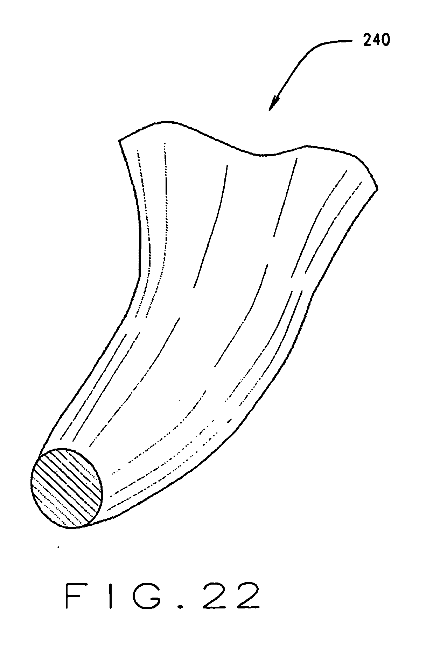

Referring to FIG. 20, during the extrusion process the extrusion flows through the proximal opening 272 of the die sleeve 212 between the cone portion 216 and the inner wall 266 and is directed toward the flow pathways 240 between each adjacent flow diverter 238 as illustrated by flow A. The extrusion has a generally tapered configuration (FIG. 22) as it flows through each respective flow pathway 240 caused by the steeply tapered side portions 257 of the flow diverters 238 before the extrusion exits through a respective outlet 224 of the die sleeve 212. As shown in FIG. 22, the flow pathway 240 has a three-way tapered configuration formed by the die insert 214.

Other peripheral die assemblies suitable for use in this invention are described in U.S. Pat. App. No. 60/882,662.

The extrudate is cut after exiting the die assembly. Suitable apparatuses for cutting the extrudate include flexible knives manufactured by Wenger Manufacturing, Inc. (Sabetha, Kansas) and Clextral, Inc. (Tampa, Florida). Typically, the speed of the cutting apparatus is from about 1000 rpm to about 2500 rpm. In an exemplary embodiment, the speed of the cutting apparatus is about 1600 rpm.

A dryer, if one is used, generally comprises a plurality of drying zones in which the air temperature may vary. Generally, the temperature of the air within one or more of the zones will be from about 100°C to about 185°C. Typically, the extrudate is present in the dryer for a time sufficient to provide an extrudate having the desired moisture content. Generally, the extrudate is dried for at least about 5 minutes and more generally, for at least about 10 minutes. Alternatively, the extrudate may be dried at lower temperatures, such as about 70°C, for longer periods of time. Suitable dryers include those manufactured by Wolverine Proctor & Schwartz (Merrimac, Mass.), National Drying Machinery Co. (Philadelphia, Pa.), Wenger (Sabetha, Kans.), Clextral (Tampa, Fla.), and Buehler (Lake Bluff, III.).

The desired moisture content may vary widely depending on the intended application of the extrudate. Generally speaking, the extruded material has a moisture content of from about 6% to about 13% by weight, if dried, and needs to be hydrated in water until the water is absorbed and the fibers are separated. If the protein product is not dried or not fully dried, its moisture content is higher, generally from about 16% to about 30% by weight.

The dried extrudate may further be comminuted to reduce the average particle size of the extrudate. Suitable grinding apparatus include hammer mills such as Mikro Hammer Mills manufactured by Hosokawa Micron Ltd. (England).

### characterization of the structured protein products

The extrudates produced typically comprise the structured protein materials having protein fibers that are substantially aligned. In the context of this invention "substantially aligned" generally refers to the arrangement of protein fibers such that a significantly high percentage of the protein fibers forming the structured protein material are contiguous to each other at less than approximately a 45° angle when viewed in a horizontal plane. Typically, an average of at least 55% of the protein fibers comprising the structured protein material are substantially aligned. In another embodiment, an average of at least 60% of the protein fibers comprising the structured protein material are substantially aligned. In a further embodiment, an average of at least 70% of the protein fibers comprising the structured protein material are substantially aligned. In an additional embodiment, an average of at least 80% of the protein fibers comprising the structured protein material are substantially aligned. In yet another embodiment, an average of at least 90% of the protein fibers comprising the structured protein material are substantially aligned. Methods for determining the degree of protein fiber alignment are known in the art and include visual determinations based upon micrographic images.

In addition to having protein fibers that are substantially aligned, the structured protein materials also typically have shear strength substantially similar to whole meat muscle. In this context of the invention, the term "shear strength" provides one means to quantify the formation of a sufficient fibrous network to impart whole-muscle like texture and appearance to the structured protein product. Shear strength is the maximum force in grams needed to shear through a given sample. A method for measuring shear strength is described in Example 7.

Generally speaking, the structured protein materials will have average shear strength of at least 1400 grams. In an additional embodiment, the structured protein materials will have average shear strength of from about 1500 to about 1800 grams. In yet another embodiment, the structured protein materials will have average shear strength of from about 1800 to about 2000 grams. In a further embodiment, the structured protein materials will have average shear strength of from about 2000 to about 2600 grams. In an additional embodiment, the structured protein materials will have average shear strength of at least 2200 grams. In a further embodiment, the structured protein materials will have average shear strength of at least 2300 grams. In yet another embodiment, the structured protein materials will have average shear strength of at least 2400 grams. In still another embodiment, the structured protein materials will have average shear strength of at least 2500 grams. In a further embodiment, the structured protein materials will have average shear strength of at least 2600 grams.

A means to quantify the size of the protein fibers formed in the structured protein materials may be done by a shred characterization test. Shred characterization is a test that generally determines the percentage of large pieces formed in the structured protein material. In an indirect manner, percentage of shred characterization provides an additional means to quantify the degree of protein fiber alignment in a structured protein material. Generally speaking, as the percentage of large pieces increases, the degree of protein fibers that are aligned within a structured protein material also typically increases. Conversely, as the percentage of large pieces decreases, the degree of protein fibers that are aligned within a structured protein material also typically decreases.

A method for determining shred characterization is detailed in Example 7. The structured protein materials typically have an average shred characterization of at least 10% by weight of large pieces. In a further embodiment, the structured protein materials have an average shred characterization of from about 10% to about 15% by weight of large pieces. In another embodiment, the structured protein materials have an average shred characterization of from about 15% to about 20% by weight of large pieces. In yet another embodiment, the structured protein materials have an average shred characterization of from about 20% to about 25% by weight of large pieces. In another embodiment, the average shred characterization is at least 20% by weight, at least 21% by weight, at least 22% by weight, at least 23% by weight, at least 24% by weight, at least 25% by weight, or at least 26% by weight large pieces.

Suitable structured protein materials generally have protein fibers that are substantially aligned, have average shear strength of at least 1400 grams, and have an average shred characterization of at least 10% by weight large pieces. More typically, the structured protein materials will have protein fibers that are at least 55% aligned, have average shear strength of at least 1800 grams, and have an average shred characterization of at least 15% by weight large pieces. In an exemplary embodiment, the structured protein materials will have protein fibers that are at least 55% aligned, have average shear strength of at least 2000 grams, and have an average shred characterization of at least 17% by weight large pieces. In another exemplary embodiment, the structured protein materials will have protein fibers that are at least 55% aligned, have average shear strength of at least 2200 grams, and have an average shred characterization of at least 20% by weight large pieces.

### hydrating and coloring the structured protein material

The structured protein material is generally colored with a coloring composition so as to resemble raw meat and/or cooked meat. The coloring compositions may comprise thermally unstable pigments, thermally stable pigments, and browning agents. The choice of the type of pigments and the amount present in the coloring composition can and will vary depending upon the desired color of the restructured meat composition. When the meat product simulates a "pre-cooked product," the structured plant material is typically contacted with browning agents and/or thermally stable pigments. Alternatively, when the meat product simulates raw meat, the structured protein material is generally contacted with thermally unstable red pigments and also with browning agents, and/or thermally stable pigments, such that when the meat product is cooked its appearance changes from a raw meat color to fully cooked color. Suitable thermally unstable red pigments, thermally stable pigments, and browning agents are described below.

The colorant(s) may be mixed with the protein-containing product and other ingredients prior to being fed into the extruder. Alternatively, the colorant(s) may be combined with the protein-containing product and other ingredients after being fed into the extruder. In the presence of the heat or the heat and pressure utilized during the extrusion process, some combinations of colorants and protein-containing product result in unexpected colors. As an example, when carmine (or lac) is contacted with the protein-containing product during the extrusion process, the color changes from red to violet/purple.

The colbrant(s) may be a natural colorant, a combination of natural colorants, an artificial colorant, a combination of artificial colorants, or a combination of natural and artificial colorants. Suitable examples of natural colorants approved for use in food include annatto (reddish-orange), anthocyanins (red to blue, depends upon pH), beet juice, beta-carotene (orange), beta-APO 8 carotenal (orange), black currant, burnt sugar; canthaxanthin (pink-red), caramel, carmine/carminic acid (bright red), cochineal extract (red), curcumin (yellow-orange); lac (scarlet red), lutein (red-orange); lycopene (orange-red), mixed carotenoids (orange), monascus (red-purple, from fermented red rice), paprika, red cabbage juice, riboflavin (yellow), saffron, titanium dioxide (white), and turmeric (yellow-orange). Suitable examples of artificial colorants approved for food use in the United States include FD&C Red No. 3 (Erythrosine), FD&C Red No. 40 (Allure Red), FD&C Yellow No. 5 (Tartrazine), FD&C Yellow No. 6 (Sunset Yellow FCF), FD&C Blue No. 1 (Brilliant Blue), FD&C Blue No. 2 (Indigotine). Artificial colorants that may be used in other countries include Cl Food Red 3 (Carmoisine), Cl Food Red 7 (Ponceau 4R), Cl Food Red 9 (Amaranth), Cl Food Yellow 13 (Quinoline Yellow), and Cl Food Blue 5 (Patent Blue V). Food colorants may be dyes, which are powders, granules, or liquids that are soluble in water. Alternatively, natural and artificial food colorants may be lake colors, which are combinations of dyes and insoluble materials. Lake colors are not oil soluble, but are oil dispersible; they tint by dispersion.

Suitable colorant(s) may be combined with the protein-containing products in a variety of forms. Non-limiting examples include solid, semi-solid, powdered, liquid, and gelatin. The type and concentration of colorant(s) utilized may vary depending on the protein-containing products used and the desired color of the colored structured protein material. Typically, the concentration of colorant(s) may range from about 0.001% to about 5.0% by weight. In one embodiment, the concentration of colorant(s) may range from about 0.01% to about 4.0% by weight. In another embodiment, the concentration of colorant(s) may range from about 0.05% to about 3.0% by weight. In still another embodiment, the concentration of colorant(s) may range from about 0.1 % to about 3.0% by weight. In a further embodiment, the concentration of colorant(s) may range from about 0.5% to about 2.0% by weight. In another embodiment, the concentration of colorant(s) may range from about 0.75% to about 1.0% by weight.

A thermally unstable pigment may be used in the coloring composition to provide the red color of raw uncooked meat The thermally unstable pigment is typically a food coloring dye or powder having a red color that resembles the red coloration of browning meat in its uncooked state (i.e., raw meat). Generally speaking, the thermally unstable pigment is a food coloring dye or powder having a structure that is degraded upon exposure to temperatures effective to cook a structured protein product. In this manner, the pigment is degraded thermally and as such, is ineffective to provide substantial coloration to the structured protein product when it is cooked. The thermally unstable pigment is typically degraded at temperatures of about 100°C or greater, more preferably at temperatures of about 75°C or greater, and most typically at temperatures of about 50°C or greater. In one embodiment, the thermally unstable pigment is betanin, a red food coloring dye or powder having poor thermal stability. Betanin is derived from red beets and is typically prepared from red beet juice or beet powder. The thermally unstable pigment may be present in the coloring composition from about 0.005% to about 30% by dry weight of the coloring composition. When the thermally unstable pigment is betanin, the betanin preferably forms from about 0.005% to about 0.5% of the coloring composition by dry weight, and more preferably forms from about 0.01% to about 0.05% of the coloring composition by dry weight. Alternatively, a beet powder or beet extract preparation containing betanin may be present in the coloring composition from about 5% to about 30% of the composition by dry weight, and more preferably from about 10% to about 25% of the coloring composition. As an example, the coloring composition could be composed of 0.0087% annatto, 21.68% beet powder, 52.81% dextrose, and 25.43% NFE (all percentages are by weight).

A thermally stable pigment comprised of one or more thermally stable food coloring dyes may be used in the coloring composition. Suitable thermally stable pigments include those that are effective to provide a structured protein product with coloration resembling browned meat in both an uncooked state and a cooked state. Suitable thermally stable pigments include caramel food coloring material, and yellow, brown, and/or orange food-coloring agents. A variety of caramel food coloring agents are useful in the present invention and are commercially available in a powdered form or in a liquid form, including Caramel Color No. 602 (available from the Williamson Company, Louisville, Kentucky), and 5440 Caramel Powder D.S. (available from Sensient Colors, Inc., St. Louis, Missouri).

Several types of commercially available yellow/orange food colorings may be used in the thermally stable pigment. Suitable yellow/orange food colors include annatto, turmeric and artificial yellow dyes such as FD&C Yellow #5. The amount of thermally stable pigment present in the coloring composition is from about 0% to about 7% by dry weight of the coloring composition, and more preferably from about 0.1% to about 3% by dry weight of the coloring composition. The yellow/orange food coloring material, preferably annatto, may constitute from about 0% to about 2% of the coloring composition by dry weight, and preferably is present in about 0.1% to about 1%, by dry weight of the coloring composition. The caramel food coloring material typically constitutes from about 0% to about 5% by dry weight, and preferably from about 0.5% to about 3%, by dry weight of the coloring composition.

The coloring composition may include browning agents which comprise an amine source and a reducing sugar. As detailed above, the browning agent generally causes a protein containing material in which the coloring composition is mixed to brown similarly to cook browning meat when the protein material is cooked. In an alternative embodiment, the browning agent of the coloring composition may also include an amine source. An amine compound reacts with a reducing sugar to induce browning. Suitable amine sources include a polypeptide material, a hydrolyzed protein material, or an amino acid material. Without being bound by any particular theory, a polypeptide material, hydrolyzed protein, and/or amino acid material is preferably included as an amine source in the browning agent to enhance the desired browning. In an exemplary embodiment, an isolated soy protein is the source of amine groups in the browning agent. When included in the coloring composition, the amine source is generally present in the coloring composition from about 20% to about 55% of the coloring composition by dry weight. An exemplary browning agent is a reducing sugar. Suitable reducing sugars are typically capable of undergoing a Maillard browning reaction in the presence of compounds containing amine groups to provide the desired browning when a protein containing material is cooked. Representative examples of suitable reducing sugars include xylose, arabinose, galactose, fructose, glyceraldehyde, mannose, dextrose, lactose and maltose. In an exemplary embodiment, the reducing sugar is dextrose. The reducing sugar may be present in the coloring composition from about 25% to about 95% by dry weight of the coloring composition, and preferably from about 30% to about 60% by dry weight of the coloring composition.

In an exemplary embodiment, the coloring composition comprises beet pigment, annatto, caramel coloring, a reducing sugar, and an amino acid source. In one alternative of this embodiment, the amino acid source comprises peptides comprised of amino acids and secondary amino acids. In another alternative embodiment, the amino acid source is isolated soy protein.

The coloring composition may further comprise an acidity regulator to maintain the pH in the optimal range for the colorant. The acidity regulator may be an acidulent. Examples of acidulents that may be added to food include citric acid, acetic acid (vinegar), tartaric acid, malic acid, fumaric acid, lactic acid, gluconic acid, phosphoric acid, sorbic acid, hydrochloric acid, propionic acid, and benzoic acid. The final concentration of the acidulent in a coloring composition may range from about 0.001% to about 5% by weight of the coloring composition. The acidity regulator may also be a pH-raising agent, such as disodium biphosphate, sodium carbonate, sodium bicarbonate, sodium hydroxide, and potassium hydroxide.

The coloring composition may be prepared by combining the components using processes and procedures known to those of ordinary skill in the art. The components are typically available in either a liquid form or a powder form, and often in both forms. The components can be mixed directly to form the coloring composition, but preferably the ingredients of the coloring composition are combined in an aqueous solution at a total concentration of about 10% to about 25% by weight, where the aqueous coloring solution can be conveniently added to a quantity of water for mixing with and coloring a structured protein material.

The following examples are included to demonstrate preferred embodiments for the preparation of the structured protein material. It should be appreciated by those of skill in the art that the techniques disclosed in the examples that follow represent techniques discovered by the inventors to function well in the preparation of the structured protein material.

### Example 5 Production of the Structured Protein Materials

The following extrusion process may be used to prepare the colored structured protein materials. Added to a dry blend mixing vessel are the following: 1000 kilograms (kg) Supro 620 (soy isolate), 440 kg wheat gluten, 236 kg wheat starch, 34 kg soy cotyledon fiber, 8 kg dicalcium phosphate, and 2 kg L-cysteine. The contents are mixed to form a dry blended soy protein mixture. The dry blend is then transferred to a hopper from which the dry blend is introduced into a preconditioner along with 480 kg of water to form a conditioned soy protein pre-mixture. The conditioned soy protein pre-mixture is then fed to a twin-screw extrusion apparatus at a rate of not more than 25 kg/minute. The extrusion apparatus comprises five temperature control zones, with the protein mixture being controlled to a temperature of from about 25°C in the first zone, about 50°C in the second zone, about 95°C in the third zone, about 130°C in the fourth zone, and about 150°C in the fifth zone. The extrusion mass is subjected to a pressure of at least about 400 psig in the first zone up to about 1500 psig in the fifth zone. Water, 60 kg, is injected into the extruder barrel, via one or more injection jets in communication with a heating zone.

A die assembly is attached to the extruder in an arrangement that permits the plasticized mixture to flow from the extruder exit port into the die assembly and produces substantial alignment of the protein fibers within the plasticized mixture as it flows through the die assembly.

As the extrudate containing protein fibers that are substantially aligned exits the die assembly, it is cut with knives and the cut mass is then dried to a moisture content of about 10% by weight. Once dry, a portion of the cut mass is sized into small pieces and larger pieces. A total of 25 pieces are obtained for each size. These pieces are then measured and tabulated in Table IV.

**Table IV**

| **Sample Number** | **Small Pieces** | | | | **Large Pieces** | |
|---|---|---|---|---|---|---|
| | L (mm) | W (mm) | | | L (mm) | W (mm) |
| 1 | 11 | 10 | | | 16 | 11 |
| 2 | 10 | 6 | | | 16 | 13 |
| 3 | 8 | 8 | | | 22 | 11 |
| 4 | 11 | 8 | | | 19 | 11 |
| 5 | 14 | 9 | | | 17 | 11 |
| 6 | 10 | 8 | | | 20 | 13 |
| 7 | 14 | 4 | | | 15 | 10 |
| 8 | 8 | 6 | | | 21 | 12 |
| 9 | 10 | 8 | | | 19 | 12 |
| 10 | 11 | 8 | | | 12 | 12 |
| 11 | 13 | 8 | | | 15 | 10 |
| 12 | 19 | 9 | | | 17 | 9 |
| 13 | 12 | 9 | | | 11 | 10 |
| 14 | 14 | 6.5 | | | 14 | 10 |
| 15 | 10 | 7 | | | 14 | 10 |
| 16 | 10 | 7 | | | 17 | 12 |
| 17 | 10 | 6 | | | 15 | 13 |
| 18 | 12 | 8 | | | 14 | 14 |
| 19 | 10 | 7 | | | 19 | 12 |
| 20 | 9 | 6 | | | 18 | 10 |
| 21 | 10 | 8 | | | 14 | 12 |
| 22 | 9 | 5 | | | 19 | 12 |
| 23 | 10 | 7 | | | 12 | 11 |
| 24 | 11 | 9 | | | 16 | 10 |
| 25 | 9 | 8 | | | 16 | 9 |
| | | | | | | |
| Avg | **11.0** | **7.4** | | Avg | **16.3** | **11.2** |
| Std. Dev | **2.3** | **1.4** | | Std. Dev. | **2.8** | **1.3** |
| Max | **19.0** | **10.0** | | Max | **22.0** | **14.0** |
| Min | **8.0** | **4.0** | | Min | **11.0** | **9.0** |

### Example 6 Determination of Shear Strength

Shear strength of a sample is measured in grams and may be determined by the following procedure. Weigh a sample of the structured protein material and place it in a heat sealable pouch and hydrate the sample with approximately three times the sample weight of room temperature tap water. Evacuate the pouch to a pressure of about 0.01 Bar and seal the pouch. Permit the sample to hydrate for about 12 to about 24 hours. Remove the hydrated sample and place it on the texture analyzer base plate oriented so that a knife from the texture analyzer will cut through the diameter of the sample. Further, the sample should be oriented under the texture analyzer knife such that the knife cuts perpendicular to the long axis of the textured piece. A suitable knife used to cut the extrudate is a model TA-45, incisor blade manufactured by Texture Technologies (USA). A suitable texture analyzer to perform this test is a model TA, TXT2 manufactured by Stable Micro Systems Ltd. (England) equipped with a 25, 50, or 100 kilogram load. Within the context of this test, shear strength is the maximum force in grams needed to shear through the sample.

### Example 7 Determination of Shred Characterization

A procedure for determining shred characterization may be performed as follows. Weigh about 150 grams of a structured protein material using whole pieces only. Place the sample into a heat-sealable plastic bag and add about 450 grams of water at 25°C. Vacuum seal the bag at about 150 mm Hg and allow the contents to hydrate for about 60 minutes. Place the hydrated sample in the bowl of a Kitchen Aid mixer model KM14G0 equipped with a single blade paddle and mix the contents at 130 rpm for two minutes. Scrape the paddle and the sides of the bowl, returning the scrapings to the bottom of the bowl. Repeat the mixing and scraping two times. Remove ∼200 g of the mixture from the bowl. Separate that mixture such that all fibers or long strands longer that 2.5 cm are segregated from the shredded mixture. Weigh the population of fibers sorted from the shredded mixture, divide this weight by the starting weight (e.g. ∼200 g), and multiply this value by 100. This determines the percentage of large pieces in the sample. If the resulting value is below 15%, or above 20%, the test is complete. If the value is between 15% and 20%, then weigh out another ∼200 g from the bowl, separate the fibers or long strands longer that 2.5 cm from the shredded mixture, and perform the calculations again.

### Examples 8 - 98 Production of Plant Protein Materials

Examples 8-98 are repeats of Example 5. Table V below delineates the analyses of Examples 5 and 8 - 98.

**TABLE V**

| **Example Number#** | **% Large Pieces** | **Shear Strength (g)** | **Hydration** | **Density (g/cc)** |
|---|---|---|---|---|
| 5 | 30.2 | 2150 | 80 | 0.27 |
| 8 | 24.2 | 2366 | 80 | 0.24 |
| 9 | 29.4 | 2341 | 60 | 0.30 |
| 10 | 26.0 | 2142 | 70 | 0.29 |
| 11 | 27.1 | 2291 | 70 | 0.28 |
| 12 | 32.7 | 2442 | 70 | 0.23 |
| 13 | 17.4 | 2668 | 70 | 0.27 |
| 14 | 26.1 | 2511 | 90 | 0.26 |
| 15 | 21.1 | 2260 | 80 | 0.28 |
| 16 | 22.3 | 2421 | 80 | 0.24 |
| 17 | 21.9 | 2490 | 75 | 0.28 |
| 18 | 22.4 | 2438 | 104 | 0.28 |
| 19 | 7.8 | 59 | 81 | 0.30 |
| 20 | 7.3 | 675 | 83 | 0.28 |
| 21 | 9.3 | 553 | 100 | 0.24 |
| 22 | 7.3 | 226 | 90 | 0.23 |
| 23 | 3.5 | 412 | 72 | 0.24 |
| 24 | 0.0 | 055 | 100 | 0.23 |
| 25 | 2.6 | 511 | 75 | 0.25 |
| 26 | 2.7 | 168 | 100 | 0.25 |
| 27 | 2.0 | 207 | 102 | 0.25 |
| 28 | 7.7 | 247 | 62 | 0.29 |
| 29 | 1.2 | 51 | 73 | 0.28 |
| 30 | 0.2 | 164 | 63 | 0.27 |
| 31 | 6.6 | 966 | 68 | 0.28 |
| 32 | 4.9 | 164 | 50 | 0.31 |
| 33 | 5.0 | 812 | 58 | 0.28 |
| 34 | 9.6 | 108 | 60 | 0.31 |
| 35 | 5.8 | 864 | 70 | 0.27 |
| 36 | 6.5 | 473 | 58 | 0.25 |
| 37 | 0.7 | 879 | 65 | 0.28 |
| 38 | 5.4 | 688 | 70 | 0.29 |
| 39 | 0.3 | 038 | 74 | 0.26 |
| 40 | 9.3 | 074 | 73 | 0.28 |
| 41 | 1.5 | 937 | 70 | 0.39 |
| 42 | 2.5 | 462 | 77 | 0.40 |
| 43 | 0.1 | 051 | 66 | 0.28 |
| 44 | 7.9 | 384 | 54 | 0.31 |
| 45 | 8.1 | 064 | 58 | 0.28 |
| 46 | 9.2 | 158 | 60 | 0.27 |
| 47 | 0.0 | 834 | 58 | 0.28 |
| 48 | 6.8 | 202 | 58 | 0.28 |
| 49 | 2.8 | 363 | 57 | 0.26 |
| 50 | 3.9 | 361 | 57 | 0.28 |
| 51 | 6.9 | 293 | 103 | 0.25 |
| 52 | 6.3 | 205 | 73 | 0.28 |
| 53 | 9.0 | 286 | 53 | 0.29 |
| 54 | 2.6 | 206 | 63 | 0.25 |
| 55 | 0.5 | 125 | 63 | 0.31 |
| 56 | 5.5 | 290 | 55 | 0.29 |
| 57 | 8.2 | 274 | 55 | 0.26 |
| 58 | 1.5 | 205 | 42 | 0.33 |
| 59 | 1.3 | 185 | 55 | 0.31 |
| 60 | 1.8 | 969 | 40 | 0.30 |
| 61 | 9.1 | 028 | 55 | 0.31 |
| 62 | 7.2 | 598 | 63 | 0.37 |
| 63 | 8.3 | 869 | 60 | 0.31 |
| 64 | 9.7 | 044 | 50 | 0.29 |
| 65 | 7.6 | 216 | 52 | 0.28 |
| 66 | 5.0 | 001 | 53 | 0.28 |
| 67 | 8.1 | 096 | 45 | 0.27 |
| 68 | 9.0 | 796 | 53 | 0.27 |
| 69 | 0.0 | 924 | 51 | 0.27 |
| 70 | 3.7 | 295 | 51 | 0.28 |
| 71 | 7.4 | 259 | 50 | 0.29 |
| 72 | 9.2 | 204 | 43 | 0.28 |
| 73 | 5.3 | 059 | 38 | 0.31 |
| 74 | 6.1 | 284 | 70 | 0.32 |
| 75 | 3.6 | 085 | 70 | 0.30 |
| 76 | 5.6 | 279 | 44 | 0.28 |
| 77 | 3.7 | 170 | 44 | 0.32 |
| 78 | 1.2 | 128 | 49 | 0.29 |
| 79 | 2.4 | 068 | 50 | 0.29 |
| 80 | 0.1 | 939 | 40 | 0.30 |
| 81 | 8.7 | 592 | 50 | 0.30 |
| 82 | 9.6 | 812 | 68 | 0.28 |
| 83 | 5.2 | 848 | 64 | 0.28 |
| 84 | 3.6 | 973 | 70 | 0.30 |
| 85 | 3.7 | 078 | 66 | 0.36 |
| 86 | 5.6 | 940 | 44 | 0.31 |
| 87 | 8.5 | 339 | 33 | 0.29 |
| 88 | 0.2 | 366 | 50 | 0.24 |
| 89 | 8.1 | 425 | 40 | 0.29 |
| 90 | 9.6 | 122 | 59 | 0.27 |
| 91 | 7.5 | 193 | 56 | 0.16 |
| 92 | 1.1 | 186 | 56 | 0.28 |
| 93 | 2.4 | 061 | 56 | 0.27 |
| 94 | 1.3 | 143 | 50 | 0.27 |
| 95 | 4.4 | 108 | 54 | 0.26 |
| 96 | 9.9 | 101 | 53 | 0.30 |
| 97 | 2.3 | 551 | 55 | 0.25 |
| 98 | 4.3 | 164 | 57 | 0.28 |
| | | | | |
| 1^{st} Quartile | 2.6 | 045 | 53 | 0.27 |
| Median | 6.5 | 164 | 60 | 0.28 |
| 3^{rd} Quartile | 0.2 | 291 | 70 | 0.30 |
| Mean | 6.6 | 156 | 63 | 0.28 |

### The Granular Composition

In another aspect, the invention discloses a process for preparing a granular composition, comprising;
combining
(A) a hydrated plant protein material having a quotient of the weight of water divided by the weight of a plant protein material of from about 2.7 to about 4.0 with
(B) a hydrated structured protein material having protein fibers that are substantially aligned, having a quotient of the weight of water divided by the weight of a structured protein material of from about 1.5 to about 2.5 to form a soft fibrous gel;
wherein the weight ratio of (A) to (B) is between about 1.5 and about 5 to about 1; cooling the soft fibrous gel to obtain a hard fibrous gel; and
reducing the size of the hard fibrous gel to particles of between about 2 millimeters and about 10 millimeters.

The granular composition is prepared by mixing together a plant protein material, discussed above, with water. This addition typically takes place in a chopper. As the plant protein material hydrates in the water, a gelation occurs. Hydration and gelation typically take place in less than one minute. This completes the formation of Component (A).

In a separate vessel, a structured protein material having protein fibers that are substantially aligned are added to water. The structured protein material is permitted to soak in the water for up to about two hours. Stirring is not necessary. This completes the formation of Component (B).

The contents of the second vessel are added to the contents of the first vessel and the combined contents are chopped until a soft fibrous gel is obtained. The soft fibrous gel is then transferred to a vessel and cooled to form a firm fibrous gel. The firm fibrous gel which is typically a slab or block is then subdivided by chopping or similar means into individual protein granules or pellets wherein the size is between about 2 millimeters and about 10 millimeters.

The following examples set forth specific but non-limiting embodiments for the preparation of the granular composition.

### Example 99

Added to a chopper are 2.45 kg of water at a temperature of between about 0°C and about 15°C, 0.7 kg SUPRO^{®} EX 33, and 0.008 kg Granulex PSR339, a colorant available from Eon Mos; Bucharest, Romania. The contents are blended or chopped for 1 minute until hydration and gelling occur. Added in a separate vessel are 1 kg of water at a temperature of between about 0°C and about 15°C, 0.5 kg SUPROMAX^{®} 5050, a structured plant protein material available from Solae, LLC, St. Louis, MO and 0.004 kg Granulex PSR339. The contents within the separate vessel are soaked for about two hours until hydration is achieved. The hydrated contents of the second vessel are added to the chopper and chopped until a soft fibrous gel is formed. The combined contents are cooled to about 5°C to form a firm fibrous gel and the cooled firm fibrous gel is reduced in size to particles of between about 2 millimeters and about 10 millimeters.

### Example 100

Added to a chopper are 2.363 kg of water at a temperature of between about 0°C and about 15°C, 0.788 kg SUPRO^{®} EX 33, and 0.008 kg Granulex PSR339. The contents are blended or chopped for 1 minute until hydration and gelling occur. Added in a separate vessel are 1 kg of water at a temperature of between about 0°C and about 15°C, 0.5 kg SUPROMAX^{®} 5050, and 0.004 kg Granulex PSR339. The contents within the separate vessel are soaked for about two hours until hydration is achieved. The hydrated contents of the second vessel are added to the chopper and chopped until a soft fibrous gel is formed. The combined contents are cooled to about 5°C to form a firm fibrous gel and the cooled firm fibrous gel is reduced in size to particles of between about 2 millimeters and about 10 millimeters.

### Example 101

Added to a chopper are 0.61 kg of water at a temperature of between about 0°C and about 15°C, 0.19 kg SUPRO^{®} EX 33, and 0.002 kg Granulex PSR339. The contents are blended or chopped for 1 minute until hydration and gelling occur. Added in a separate vessel are 0.133 kg of water at a temperature of between about 0°C and about 15°C, 0.067 kg SUPROMAX^{®} 5050, and 0.001 kg Granulex PSR339. The contents within the separate vessel are soaked for about two hours until hydration is achieved. The hydrated contents of the second vessel are added to the chopper and chopped until a soft fibrous gel is formed. The combined contents are cooled to about 5°C to form a firm fibrous gel and the cooled firm fibrous gel is reduced in size to particles of between about 2 millimeters and about 10 millimeters.

### Example 102

Added to a chopper are 3.2 kg of water at a temperature of between about 0°C and about 15°C, 1 kg SUPRO^{®} EX 37, and 0.0212 kg Granulex PSR339. The contents are blended or chopped for 1 minute until hydration and gelling occur. Added in a separate are 0.702 kg of water at a temperature of between about 0°C and about 15°C, 0.351 kg SUPROMAX^{®} 5000, a structured plant protein material available from Solae, LLC, St. Louis, MO and 0.008 kg Granulex PSR339. The contents within the separate vessel are soaked for about two hours until hydration is achieved. The hydrated contents of the second vessel are added to the chopper and chopped until a soft fibrous gel is formed. The combined contents are cooled to about 5°C to form a firm fibrous gel and the cooled firm fibrous gel is reduced in size to particles of between about 2 millimeters and about 10 millimeters.

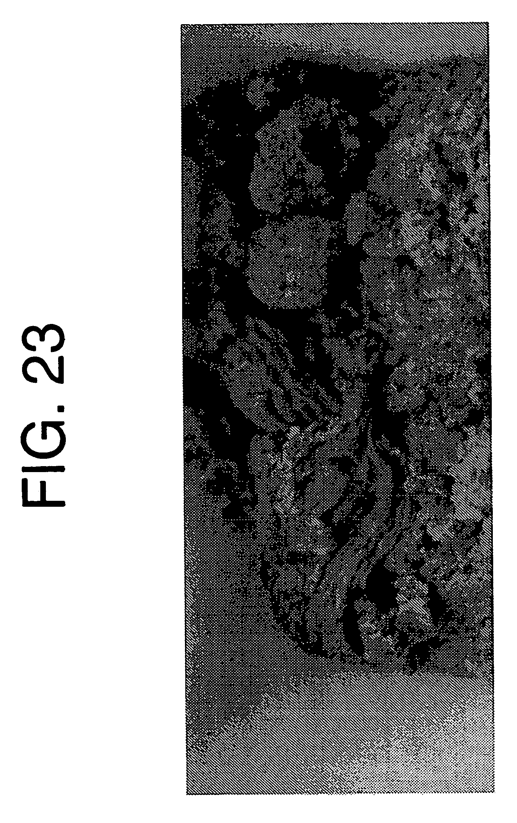

FIG 23 depicts a color photographic image of a firm fibrous gel of Example 102 prior to particle size reduction.

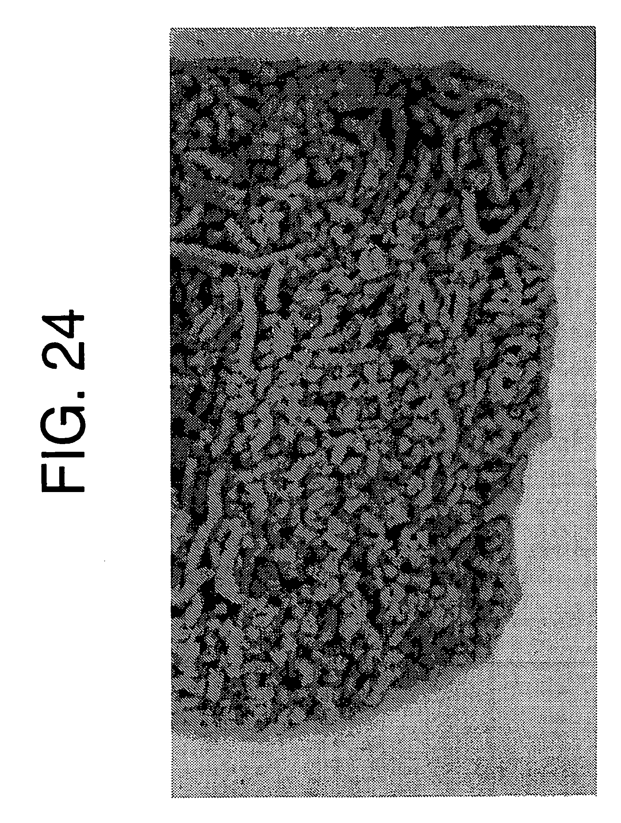

FIG 24 depicts a color photographic image of a firm fibrous gel of Example 102 after particle size reduction.

In the preparation of the granular composition, it is also desirable in the context of the present invention to include additional additives such as salt, flavoring, colors, and the like provided that the additives does not adversely affect the structure of the granular composition. Examples of suitable flavorings and the like include hydrolyzed vegetable proteins and natural flavorings. Vitamins and minerals can also be added to improve the overall nutritional profile.

The granular composition can be frozen in order to provide extended storage or can include various materials such as antimicrobial or antimycotic agents to provide some degree of shelf stability for the granular composition, provided that these additives do not interfere with the formation of the granular composition.

### The Meat Product

A meat product is prepared, comprising; a hydrated granular composition comprising;
(A) a hydrated plant protein material;
(B) a hydrated structured protein material having protein fibers that are substantially aligned;
   wherein the weight ratio of (A) to (B) is between about 1.5 and about 5 to about 1 to produce a granular composition having a particle size of between about 2 millimeters and about 10 millimeters;
(C) a raw meat; wherein the weight ratio of the raw meat to the granular composition is between about 2 millimeters and about 10 millimeters.

The preparation of the hydrated granular composition is disclosed above.

### The Raw Meat

The raw meat, component (C) in the present invention is an animal tissue and comprises muscle tissue, organ tissue, and connective tissue. The meat is selected from the group consisting of beef, pork, lamb, turkey and chicken. The term "meat" as used herein includes not only animal tissue (such as would be recognized as "meat" by the layman, particularly skeletal meats, such as pork shoulder, beef shoulder, beef flank and turkey thigh), but also that broader class of animal products recognized as "meat" by the food processing industry, such as meat by-products, pork heads, pork skirt, poultry meal, fish trimmings, fish meal, rendered meal, meat trimmings, animal liver, meat meal, meat and bone meal. It will, of course, be appreciated that the nature of those animals which are regarded as acceptable for human or even pet consumption may vary from time to time and will also, of course, vary with custom, culture and fashion. Alternatively, the raw meat may be from a game animal. Non-limiting examples of suitable game animals include buffalo, deer, elk, moose, reindeer, caribou, antelope, rabbit, squirrel, beaver, muskrat, opossum, raccoon, armadillo, porcupine, alligator, and snake. In a further embodiment, the raw meat may be from a fish or shellfish. Non-limiting examples of suitable fish or fish products include saltwater and freshwater fish, such as, catfish, tuna, salinon, bass, mackerel, pollack, hake, tilapia, cod, grouper, whitefish, bowfin, gar, paddlefish, sturgeon, bream, carp, trout, surimi, walleye, snakehead, and shark. In an exemplary embodiment, the raw meat is from beef, pork, or turkey. Further, by "meat" it is meant high quality whole muscle or natural lean meat. The lean muscle meat for beef and pork has a high lean meat content of at least 70% with the remainder being the animal fat. Nomenclature for this lean muscle meat is 70/30. The beef and pork lean muscle meat has a high lean meat content of about 95% with the remainder being the animal fat. Nomenclature for this lean muscle meat is 95/5. Turkey and chicken lean muscle meats contain at least 78% lean meat content up to 96% lean meat content.

Meat includes striated muscle which is skeletal or that which is found, for example, in the tongue, diaphragm, heart, or esophagus, with or without accompanying overlying fat and portions of the skin, sinew, nerve and blood vessels which normally accompany the meat flesh. Examples of meat by-products are organs and tissues such as lungs, spleens, kidneys, brain, liver, blood, bone, partially defatted low-temperature fatty tissues, stomachs, intestines free of their contents, and the like.

The term "meat by-products" is intended to refer to those non-rendered parts of the carcass of slaughtered animals including but not restricted to mammals, poultry and the like and including such constituents as are embraced by the term "meat by-products" in the Definitions of Feed Ingredients published by the Association of American Feed Control Officials, Incorporated.

The meat mix selected for use is passed through a grinder to reduce the meat material into pieces of substantially uniform size. Generally it is preferred to pass the meat through a grinder equipped with a 10 cm or smaller grinding plate. While satisfactory results may be obtained by grinding the meat to a particle size larger than 1 cm, the use of such larger meat particles is generally not preferred. Typically, the particle size of the meat is from about 3 up to about 5 mm. If the meat materials to be used are in a frozen condition, they must first be prebroken or cut into pieces in order to reduce the size of the pieces going into the grinder. While the size of the pieces will depend on the size of the meat grinder intake, normally the frozen meat material is cut into pieces about 10 cm square.

Although the raw meat, is preferably provided in at least substantially frozen form so as to avoid microbial spoilage prior to processing, once the meat is ground, it is not necessary to freeze it to provide cutability into individual strips or pieces. Unlike meat meal, raw meat has a natural high moisture content with a ratio of protein to moisture of from about 1:3.6 to 1:3.7.

The raw meat used in the present invention may be any edible meat suitable for consumption. The meat may be non-rendered, non-dried, raw meat, raw meat products, raw meat by-products, and mixtures thereof. The meat or meat products are generally supplied daily in a completely frozen or at least substantially frozen condition so as to avoid microbial spoilage. Generally the temperature of the meat is below about 40°C (104°F), preferably below about 10°C (50°F) more preferably is from about -4°C (25°F) to about 6°C (43°F) and most preferably from about -2°C (28°F) to about 2°C (36°F). While refrigerated or chilled meat may be used, it is generally impractical to store large quantities of unfrozen meat for extended periods of time at a plant site. The frozen products provide a longer lay time than do the refrigerated or chilled products.

In lieu of frozen meat, the meat may be freshly prepared for the preparation of the meat product, as long as the freshly prepared meat meets the temperature conditions of not more than about 40°C (104°F).

The moisture content of the raw frozen or unfrozen meat is generally at least about 50% by weight, and most often from about 60% by weight to about 75% by weight, based upon the weight of the raw meat. In one embodiment of the invention, the fat content of the raw frozen or unfrozen meat is at least 2% by weight. Generally the fat content of the raw frozen or unfrozen meat is from about 3% by weight to about 95% by weight. In another embodiment, the fat content of the raw frozen or unfrozen meat is about 20% by weight to about 95% by weight. In other embodiments of the invention, meat products may be combined to produce a meat composition that has a fat content of from about 15% by weight to about 30% by weight. In another embodiment, the meat composition may have a fat content of less than about 10% by weight and defatted meat products may be used.

The frozen or chilled meat may be stored at a temperature of about -18°C (0.4°F) to about 0°C (32°F). It is generally supplied in 20 kilogram blocks. Upon use, the blocks are permitted to thaw up to about 10°C (50°F), that is, to defrost, but in a tempered environment. Thus, the outer layer of the blocks, for example up to a depth of about 1/4", may be defrosted or thawed but still at a temperature of about 0°C (32°F), while the remaining inner portion of the blocks, while still frozen, are continuing to thaw and thus keeping the outer portion at below about 10°C (50°F).

Typically, the amount of the granular composition in relation to the amount of raw meat in the meat product can and will vary depending upon the composition's intended use. By way of example, when a significantly vegetarian composition that has a relatively small degree of animal flavor is desired, the concentration of animal meat in the meat product may be about 45%, 40%, 35%, 30%, 25%, 20%, 15%, 10%, 5%, 2%, or 0% by weight. Alternatively, when a meat product having a relatively high degree of animal meat flavor is desired, the concentration of animal meat in the meat product may be about 50%, 55%, 60%, 65%, 70%, 75%, 80%, 85%, 90% or 95% by weight. Consequently, the concentration of granular composition in the meat product may be about 5%, 10%, 15%, 20%, 25%, 30%, 35%, 40%, 45%, 50%, 55%, 60%, 65%, 70%, 75%, 80%, 85%, 90%, 95%, or 99% by weight. In a preferred embodiment, the meat product will generally have from about 40% to about 60% by weight of the granular composition and from about 40% to about 60% by weight of animal meat. In another preferred embodiment, the weight ratio of raw meat to the granular composition is between about 20 to about 2.

In another aspect, the invention discloses a process for preparing a meat product, comprising the steps of;
combining a granular composition prepared by the process comprising;
combining
(A) a hydrated plant protein material having a quotient of water on a weight basis divided by the plant protein material on a weight basis of from about 2.7 to about 4.0 with
(B) a hydrated structured protein material having protein fibers that are substantially aligned, having a quotient of the weight of water divided by the weight of a structured protein material of from about 1.5 to about 2.5 to form a soft fibrous gel;
   wherein the weight ratio of (A) to (B) is between about 1.5 and about 5 to about 1; cooling the soft fibrous gel to obtain a hard fibrous gel; and
   reducing the size of the hard fibrous gel to particles of between about 2 millimeters and about 10 millimeters; and
   mixing the particles with
(C) a raw meat;
   wherein the weight ratio of the raw meat to the granular composition is between about 20 to about 2; and
   wherein the meat product contains granular composition particles of between about 2 millimeters and about 10 millimeters.

The following example sets forth specific but non-limiting embodiments for the preparation of the meat product.

### Example 103

Added to bowl cutter are 10 kg 85/15 beef, 0.6 kg spice mixture, 0.5 kg glucono delta lactone, 2.4 kg mixture of sodium chloride and sodium nitrite, 5 kg water, 1 kg of Supro^{®} EX 33, 22 kg 70/30 pork trims, 18 kg 15/85 pork back fat, and 30 kg 90/10 beef. The contents are chopped until a uniform meat mass is obtained. After chopping is complete, 10 kg of the granular composition of Example 102 is added. The contents are mixed to incorporate the granular composition and then transferred to a stuffing machine where the contents are stuffed into impermeable casings, which are heated to a core temperature of about 72°C. Stuffing machines are available from various commercial manufacturers including, but not limited to, HITEC Food Equipment, Inc., located in Elk Grove Village, I11., Townsend Engineering Co., located in Des Moines, Iowa, Robert Reiser & Co., Inc., located in Canton, Mass., and Handtmann, Inc., located in Buffalo Grove, I11.

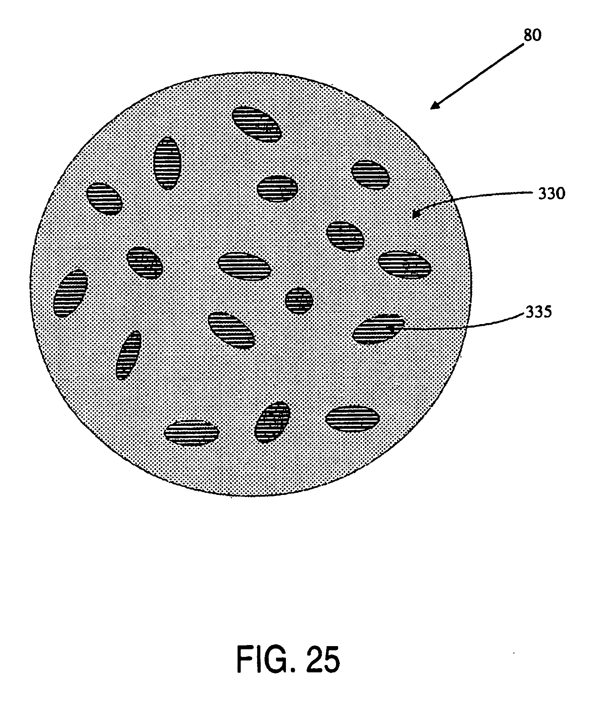

As shown in FIG. 25 at 80, a cross sectional view of a cut piece of a stuffed meat product is shown. A non-exhaustive list of examples of stuffed meat products that are exemplified by FIG. 25 are sausage, salami, hot dogs, and bologna. Chopped meats are shown at 330. The granular composition particles of between about 2 millimeters and about 10 millimeters are shown at 335.

In a further aspect, the invention discloses a vegetable product or a fruit product, comprising; a granular composition comprising;
(A) a hydrated plant protein material;
(B) a hydrated structured protein material having protein fibers that are substantially aligned;
   wherein the weight ratio of (A) to (B) is between about 1.5 and about 5 to about 1 to produce a granular composition having a particle size of between about 2 millimeters and about 10 millimeter and
(D) a comminuted vegetable or comminuted fruit.

In another aspect, the invention discloses a process for preparing a vegetable product or fruit product, comprising the steps of;
combining a granular composition prepared by the process comprising;
combining
(A) a hydrated plant protein material having a quotient of water on a weight basis divided by the plant protein material on a weight basis of from about 2.7 to about 4.0 with
(B) a hydrated structured protein material having protein fibers that are substantially aligned, having a quotient of the weight of water divided by the weight of a structured protein material of from about 1.5 to about 2.5 to form a soft fibrous gel;
   wherein the weight ratio of (A) to (B) is between about 1.5 and about 5 to about 1; cooling the soft fibrous gel to obtain a hard fibrous gel; and
   reducing the size of the hard fibrous gel to particles of between about 2 millimeters and about 10 millimeters; and
   mixing the particles with
(D) a comminuted vegetable or comminuted fruit; and
mixing the granular composition and comminuted vegetable or comminuted fruit.

The preparation of the hydrated granular composition is disclosed above.

### The Comminuted Vegetable or Comminuted Fruit

A variety of vegetables or fruits are suitable for use in the comminuted vegetable product or comminuted fruit product. Typically, the amount of the granular composition in relation to the amount of comminuted vegetable or comminuted fruit in the comminuted vegetable product or comminuted fruit product can and will vary depending upon the composition's intended use. By way of example, the concentration of comminuted vegetable or comminuted fruit in the comminuted vegetable product or comminuted fruit product may be about 95%, 90%, 85%, 80%, 75%, 70%, 65%, 60%, 55%, 50%, 45%, 40%, 35%, 30%, 25%, 20%, 15%, 10%, 5%, 2%, or 0% by weight. Consequently, the concentration of the granular composition in the comminuted vegetable product or comminuted fruit product may be about 5%, 10%, 15%, 20%, 25%, 30%, 35%, 40%, 45%, 50%, 55%, 60%, 65%, 70%, 75%, 80%, 85%, 90%, 95%, or 99% by weight. In an exemplary embodiment, the comminuted vegetable product or comminuted fruit product will generally have from about 40% to about 60% by weight of the hydrated structured protein product and from about 40% to about 60% by weight of comminuted vegetable or comminuted fruit.

Examples of vegetable products are vegetarian food products including vegetarian patties, vegetarian hot dogs, vegetarian sausages, and vegetarian crumbles. Another example of a vegetarian food product is cheeses that are extended with the hydrated and shredded protein composition.

Examples of fruit products prepared by the above process are snack food products including fruit rollups, cereals, and fruit crumbles.

While the invention has been explained in relation to its preferred embodiments, it is to be understood that various modifications thereof will become apparent to those skilled in the art upon reading the description. Therefore, it is to be understood that the invention disclosed herein is intended to cover such modifications as fall within the scope of the appended claims.

## Claims

1. A granular composition, comprising:
(A) a hydrated plant protein material and
(B) a hydrated structured protein material having protein fibers that are substantially aligned;
wherein the weight ratio of (A) to (B) is between 1.5 and 5 to 1, said granular composition having a particle size of between 2 millimeters and 10 millimeters.

2. The granular composition of claim 1, wherein the protein for (A) and (B) is independently selected from the group consisting of legumes, corn, peas, canola, sunflowers, sorghum, rice, amaranth, potato, tapioca, arrowroot, canna, lupin, rape, wheat, oats, rye, barley, and mixtures thereof.

3. The granular composition of claim 2 wherein the protein is a soy protein.

4. The granular composition of claim 1, wherein the protein of (A) is a soy protein isolate.

5. The granular composition of claim 1, wherein the protein of (B) comprises soy protein and wheat protein.

6. The granular composition of claim 5, wherein the protein of (B) further comprises whey protein.

7. The granular composition of claim 5, wherein the protein of (B) comprises:
i) from 45% to 65% soy protein on a dry matter basis;
ii) from 20% to 30% wheat gluten on a dry matter basis;
iii) from 10% to 15% wheat starch on a dry matter basis; and
iv) from 1 % to 5% fiber on a dry matter basis.

8. A meat product, comprising; a granular composition comprising;
(A) a hydrated plant protein material;
(B) a hydrated structured protein material having protein fibers that are substantially aligned;
wherein the weight ratio of (A) to (B) is between 1.5 and 5 to 1, said granular composition having a particle size of between 2 millimeters and 10 millimeters; and
(C) a raw meat;
wherein the weight ratio of the raw meat to the granular composition is between 20 to 2.

9. The meat product of claim 8, wherein the raw meat is an animal meat selected from the group consisting of whole muscle pieces, comminuted meat, mechanically deboned meat, and combinations thereof.

10. The meat product of claim 9, wherein the animal meat is derived from an animal selected from the group consisting of pork, beef, lamb, poultry, wild game, and fish.

11. The meat product of claim 8 wherein the protein for (A) and (B) is a soy protein.

12. The meat product of claim 8, wherein the protein of (B) comprises soy protein and wheat protein.

13. The meat product of claim 12, wherein the protein of (B) comprises:
i) from 45% to 65% soy protein on a dry matter basis;
ii) from 20% to 30% wheat gluten on a dry matter basis;
iii) from 10% to 15% wheat starch on a dry matter basis; and
iv) from 1 % to 5% fiber on a dry matter basis.

14. A comminuted vegetable product or comminuted fruit product, comprising; a granular composition comprising;
(A) a hydrated plant protein material;
(B) a hydrated structured protein material having protein fibers that are substantially aligned;
wherein the weight ratio of (A) to (B) is between 1.5 and 5 to 1, said granular composition having a particle size of between 2 millimeters and 10 millimeter and
(D) a comminuted vegetable or comminuted fruit.

15. The comminuted vegetable product or comminuted fruit product of claim 14, wherein the protein of (B) comprises:
i) from 45% to 65% soy protein on a dry matter basis;
ii) from 20% to 30% wheat gluten on a dry matter
iii) from 10% to 15% wheat starch on a dry matter
iv) from 1 % to 5% fiber on a dry matter basis.

## Patentansprüche

1. Granuläre Zusammensetzung umfassend:
(A) hydriertes Pflanzenproteinmaterial und
(B) hydriertes strukturiertes Proteinmaterial, das Proteinfasern aufweist, die im Wesentlichen aneinander ausgerichtet sind;
wobei das Gewichtsverhältnis von (A) zu (B) zwischen 1,5 und 5 zu 1 beträgt, wobei die granuläre Zusammensetzung eine Teilchengröße zwischen 2 Millimetern und 10 Millimetern aufweist.

2. Granuläre Zusammensetzung nach Anspruch 1, wobei die Proteine in (A) und (B) unabhängig voneinander ausgewählt sind aus der Gruppe bestehend aus Hülsenfrüchten, Mais, Erbsen, Canola, Sonnenblumen, Sorghum, Reis, Amaranth, Kartoffel, Tapioka, Pfeilwurz, Canna, Lupine, Raps, Weizen, Hafer, Roggen, Gerste und Gemischen davon.

3. Granuläre Zusammensetzung nach Anspruch 2, wobei das Protein ein Sojaprotein ist.

4. Granuläre Zusammensetzung nach Anspruch 1, wobei das Protein in (A) ein Sojaproteinisolat ist.

5. Granuläre Zusammensetzung nach Anspruch 1, wobei das Protein in (B) Sojaprotein und Weizenprotein umfasst.

6. Granuläre Zusammensetzung nach Anspruch 5, wobei das Protein in (B) ferner Molkeprotein umfasst.

7. Granuläre Zusammensetzung nach Anspruch 5, wobei das Protein in (B) umfasst:
i) 45 % bis 65 % Sojaprotein im Trockenzustand;
ii) 20 % bis 30 % Weizengluten im Trockenzustand;
iii) 10 % bis 15 % Weizenstärke im Trockenzustand; sowie
iv) 1 % bis 5 % Ballaststoff im Trockenzustand.

8. Fleischprodukt, das eine granuläre Zusammensetzung umfasst, welche umfasst:
(A) hydriertes Pflanzenproteinmaterial;
(B) hydriertes strukturiertes Proteinmaterial, das Proteinfasern aufweist, die im Wesentlichen aneinander ausgerichtet sind;
wobei das Gewichtsverhältnis von (A) zu (B) zwischen 1,5 und 5 zu 1 beträgt, wobei die granuläre Zusammensetzung eine Teilchengröße zwischen 2 Millimetern und 10 Millimetern aufweist; sowie;
(C) rohes Fleisch,
wobei das Gewichtsverhältnis des rohen Fleisches zu der granulären Zusammensetzung zwischen 20 und 2 liegt.

9. Fleischprodukt nach Anspruch 8, wobei das rohe Fleisch tierisches Fleisch ist, das ausgewählt ist aus der Gruppe bestehend aus ganzen Muskelstücken, zerkleinertem Fleisch, mechanisch entbeintem Fleisch und Kombinationen davon.

10. Fleischprodukt nach Anspruch 9, wobei das tierische Fleisch von einem Tier stammt, das ausgewählt ist aus der Gruppe bestehend aus Schwein, Rind, Lamm, Geflügel, Wild und Fisch.

11. Fleischprodukt nach Anspruch 8, wobei das Protein in (A) und in (B) ein Sojaprotein ist.

12. Fleischprodukt nach Anspruch 8, wobei das Protein in (B) Sojaprotein und Weizenprotein umfasst.

13. Fleischprodukt nach Anspruch 12, wobei das Protein in (B) umfasst:
i) 45 % bis 65 % Sojaprotein im Trockenzustand;
ii) 20 % bis 30 % Weizengluten im Trockenzustand;
iii) 10 % bis 15 % Weizenstärke im Trockenzustand; sowie
iv) 1 % bis 5 % Ballaststoff im Trockenzustand.

14. Zerkleinertes Gemüseprodukt oder zerkleinertes Fruchtprodukt, das eine granuläre Zusammensetzung umfasst, welche umfasst:
(A) hydriertes Pflanzenproteinmaterial und
(B) hydriertes strukturiertes Proteinmaterial, das Proteinfasern aufweist, die im Wesentlichen aneinander ausgerichtet sind;
wobei das Gewichtsverhältnis von (A) zu (B) zwischen 1,5 und 5 zu 1 beträgt, wobei die granuläre Zusammensetzung eine Teilchengröße zwischen 2 Millimetern und 10 Millimetern aufweist und
(D) zerkleinertes Gemüse oder zerkleinerte Frucht.

15. Zerkleinertes Gemüseprodukt oder zerkleinertes Fruchtprodukt nach Anspruch 14, wobei das Protein in (B) umfasst:
i) 45 % bis 65 % Sojaprotein im Trockenzustand;
ii) 20 % bis 30 % Weizengluten im Trockenzustand;
iii) 10 % bis 15 % Weizenstärke im Trockenzustand; sowie
iv) 1 % bis 5 % Ballaststoff im Trockenzustand.

## Revendications

1. Une composition granulaire, comprenant:
(A) un matériau protéique de plantes hydraté et
(B) un matériau protéique structuré et hydraté comportant des fibres protéiques substantiellement alignées;
dans laquelle le rapport pondéral (A)/(B) est compris entre 1,5 et 5 à 1, ladite composition granulaire ayant une taille de particules comprise entre 2 millimètres et 10 millimètres.

2. La composition granulaire selon la revendication 1, dans laquelle les protéines de (A) et de (B) sont choisies, indépendamment l'une de l'autre, dans le groupe consistant en les légumes, le maïs, les pois, le canola, les tournesols, le sorgho, le riz, l'amaranthe, les pommes de terre, le tapioca, la fécule de marante, le canna, le lupin, la navette, le blé, l'avoine, le seigle, l'orge, et leurs mélanges.

3. La composition granulaire selon la revendication 2, dans laquelle la protéine est une protéine de soja.

4. La composition granulaire selon la revendication 1, dans laquelle la protéine de (A) est un isolat de protéines de soja.

5. La composition granulaire selon la revendication 1, dans laquelle la protéine de (B) comprend de la protéine de soja et de la protéine de blé.

6. La composition granulaire selon la revendication 5, dans laquelle la protéine de (B) comprend en outre de la protéine lactosérique.

7. La composition granulaire selon la revendication 5, dans laquelle la protéine de (B) comprend:
i) de 45% à 65% de protéine de soja, exprimés sur une base de matière sèche;
ii) de 20% à 30% de gluten de blé, exprimés sur une base de matière sèche;
iii) de 10% à 15% d'amidon de blé, exprimés sur une base de matière sèche; et
iv) de 1 % à 5% de fibres, exprimés sur une base de matière sèche.

8. Un produit camé, comprenant; une composition granulaire comprenant;
(A) un matériau protéique de plantes hydraté;
(B) un matériau protéique structuré et hydraté comportant des fibres protéiques substantiellement alignées;
dans lequel le rapport pondéral (A)/(B) est compris entre 1,5 et 5 à 1, ladite composition granulaire ayant une taille de particules comprise entre 2 millimètres et 10 millimètres; et
(C) un matériau brut carné ;
dans lequel le rapport pondéral matériau brut carné/composition granulaire est compris entre 20 et 2.

9. Le produit carné selon la revendication 8, dans lequel le matériau brut carné est une viande animale choisie dans le groupe comprenant des pièces entières de muscles, de la viande hachée menue, de la viande désossée par voie mécanique et leurs combinaisons.

10. Le produit carné selon la revendication 9, dans lequel la viande animale est obtenue à partir d'animaux choisis dans le groupe comprenant les porcs, les boeufs, l'agneau, la volaille, le gibier et les poissons.

11. Le produit carné selon la revendication 8 dans lequel la protéine de (A) et de (B) est une protéine de soja.

12. Le produit carné selon la revendication 8, dans lequel la protéine de (B) comprend de la protéine de soja et de la protéine de blé.

13. Le produit carné selon la revendication 12, dans lequel la protéine de (B) comprend:
i) de 45% à 65% de protéine de soja, exprimés sur une base de matière sèche;
ii) de 20% à 30% de gluten de blé, exprimés sur une base de matière sèche;
iii) de 10% à 15% d'amidon de blé, exprimés sur une base de matière sèche; et
iv) de 1 % à 5% de fibres, exprimés sur une base de matière sèche.

14. Un produit végétal haché menu ou produit fruitier haché menu, comprenant une composition granulaire comprenant;
(A) un matériau protéique de plantes hydraté;
(B) un matériau protéique structuré et hydraté comportant des fibres protéiques substantiellement alignées,
dans lequel le rapport pondéral (A)/(B) est compris entre 1,5 et 5 à 1, ladite composition granulaire ayant une taille de particules comprise entre 2 millimètres et 10 millimètres et
(D) un végétal haché menu ou un fruit haché menu.

15. Le produit végétal haché menu ou produit fruitier haché menu selon la revendication 14, dans lequel la protéine de (B) comprend:
i) de 45% à 65% de protéine de soja, exprimés sur une base de matière sèche;
ii) de 20% à 30% de gluten de blé exprimés sur une base de matière sèche
iii) de 10% à 15% d'amidon de blé exprimés sur une base de matière sèche
iv) de 1 % à 5% de fibres, exprimés sur une base de matière sèche.
